# EUROPÄISCHE PATENTSCHRIFT

(11) **EP 3 199 913 B1**
(45) Veröffentlichungstag und Bekanntmachung des Hinweises auf die Patenterteilung: **03.04.2019**
(21) Anmeldenummer: 16153146.2
(22) Anmeldetag: 28.01.2016
(51) Int. Cl.: G01S 17/10, G01C 1/04, G01C 15/00, G01S 17/42, G01S 17/66

(54) **VORRICHTUNG ZUM AUTOMATISCHEN AUFFINDEN EINES BEWEGLICHEN GEODÄTISCHEN ZIELOBJEKTS**
DEVICE FOR AUTOMATICALLY LOCATING A MOVEABLE GEODESIC TARGET OBJECT
DISPOSITIF DE RECHERCHE AUTOMATIQUE D'UN OBJET CIBLE GEODESIQUE MOBILE

(43) Veröffentlichungstag der Anmeldung: 02.08.2017
(73) Patentinhaber: Leica Geosystems AG, 9435 Heerbrugg (CH)
(72) Erfinder: TÖRÖK, Zoltán, 9442 Berneck (CH); HORNUNG, Ulrich, 9008 St. Gallen (CH)
(74) Vertreter: Kaminski Harmann

(56) Entgegenhaltungen:
- US-A- 6 046 800
- US-A- 6 133 998
- US-A1- 2003 169 414
- US-A1- 2008 316 497

## Beschreibung

Die Erfindung betrifft eine Vorrichtung zum automatischen Auffinden eines beweglichen geodätischen Zielobjekts nach dem Oberbegriff des Anspruchs 1, und ein entsprechendes Verfahren nach Anspruch 14. Die Erfindung betrifft zudem ein zugehöriges Computerprogrammprodukt gemäss Anspruch 15 zur Durchführung des erfindungsgemässen Verfahrens.
Zum Vermessen eines Zielpunktes sind seit der Antike zahlreiche Vermessungsgeräte bekannt. Als räumliche Standarddaten werden dabei Richtung bzw. Winkel und meist auch Entfernung von einem Messgerät zum zu vermessenden Zielpunkt aufgenommen, beispielsweise mittels Laserstrahlung, sowie insbesondere die absolute Position des Messgerätes nebst eventuell vorhandenen Bezugspunkten erfasst.
Allgemein bekannte Beispiele für solche Vermessungsgeräte stellen Theodolit, Tachymeter und Totalstation, die auch als elektronischer Tachymeter oder Computer-Tachymeter bezeichnet werden, dar. Eine geodätische Messvorrichtung des Stands der Technik ist beispielsweise in der Veröffentlichungsschrift EP 1,686,350 beschrieben. Derartige Geräte verfügen über elektrosensorische Winkel- und ggf. Distanzmessfunktion, welche eine Richtungs- und Distanzbestimmung zu einem ausgewählten Ziel erlauben. Zur Richtungs- und Distanzbestimmung weisen die Geräte in der Regel eine Strahlungsquelle auf zur Emission einer Messstrahlung wie z.B. Laserstrahlung. Die Winkel- bzw. Distanzgrössen werden dabei im inneren Bezugssystem des Gerätes ermittelt und müssen für eine absolute Positionsbestimmung ggf. noch mit einem äusseren Bezugssystem verknüpft werden.

In vielen geodätischen Anwendungen erfolgt eine Vermessung von Zielpunkten, indem dort speziell ausgestaltete Zielobjekte platziert oder auf einem beweglichen Fahrzeug, z.B. einer Baumaschine, montiert werden, so dass ein geodätisches Vermessungssystem aus Vermessungsgerät und Zielobjekt vorliegt. Ein derartiges Zielobjekt als Messhilfsinstrument besteht beispielsweise aus einem Retroreflektor (z.B. einem Rundum-Prisma), der z.B. auf einem Lotstock angebracht ist und welcher von der Totalstation emittierte Laserstrahlung retroreflektiert. Es sind aber auch reflektorlos arbeitende Vermessungssysteme möglich, wie sie beispielsweise in der europäischen Patentanmeldung mit der Anmeldenummer EP 10168771.3 beschrieben sind.

Zum Anzielen des zu vermessenden Zielpunkts weisen gattungsgemässe geodätische Vermessungsgeräte ein Zielfernrohr, wie z.B. ein optisches Teleskop, als Anziel- oder Visiereinrichtung auf. Das Zielfernrohr ist im Allgemeinen um eine vertikale Stehachse und um eine horizontale Kippachse relativ zu einer Basis des Messgeräts drehbar, so dass das Fernrohr durch Schwenken und Kippen auf den zu vermessenden Punkt ausgerichtet werden kann. Moderne Geräte können additiv zum optischen Sichtkanal eine in das Zielfernrohr integrierte und beispielsweise koaxial oder parallel ausgerichtete Kamera zur Erfassung eines Bildes aufweisen, wobei das erfasste Bild insbesondere als Live-Bild auf dem Display der Anzeige-Steuereinheit und/oder auf einem Display des zur Fernsteuerung verwendeten Peripheriegeräts - wie z.B. des Datenloggers - dargestellt werden kann. Die Optik der Visiereinrichtung kann dabei einen manuellen Fokus - beispielsweise eine Stellschraube zur Veränderung der Position einer Fokussieroptik - aufweisen oder über einen Autofokus verfügen, wobei das Verändern der Fokusposition z.B. durch Servomotoren erfolgt. Beispielsweise ist eine solche Visiereinrichtung eines geodätischen Vermessungsgeräts in der Europäischen Patentanmeldung Nr. 09152540.2 beschrieben. Automatische Fokussiereinrichtungen für Zielfernrohre geodätischer Geräte sind z.B. aus der DE 197 107 22 oder der DE 199 495 80 bekannt. Beispielhaft ist der Aufbau gattungsgemässer Zielfernrohre von geodätischen Geräten in den Veröffentlichungsschriften EP 1 081 459 oder EP 1 662 278 gezeigt.

Moderne Totalstationen verfügen über Mikroprozessoren zur digitalen Weiterverarbeitung und Speicherung erfasster Messdaten. Die Geräte weisen in der Regel eine kompakte und integrierte Bauweise auf, wobei meist koaxiale Distanzmesselemente sowie Rechen-, Steuer- und Speichereinheiten, z.B. in Form einer Steuer- und Auswerteeinheit, in einem Gerät vorhanden sind. Abhängig von der Ausbaustufe der Totalstation können zudem eine Motorisierung der Anziel- bzw. Visiereinrichtung sowie - im Fall der Verwendung von Retroreflektoren (etwa eines Rundum-Prismas) als Zielobjekte - Mittel zur automatischen Zielsuche und -verfolgung integriert sein. Als Mensch-Maschine-Schnittstelle kann die Totalstation eine elektronische Anzeige-Steuereinheit - im Allgemeinen eine Mikroprozessor-Recheneinheit mit elektronischen Datenspeichermitteln - mit Display und Eingabemitteln, z.B. einer Tastatur, aufweisen. Der Anzeige-Steuereinheit werden die elektrosensorisch erfassten Messdaten zugeführt, sodass die Position des Zielpunkts durch die Anzeige-Steuereinheit ermittelbar, optisch anzeigbar und speicherbar ist. Aus dem Stand der Technik bekannte Totalstationen können des Weiteren über eine Funkdatenschnittstelle verfügen zum Aufbau einer Funkverbindung zu externen Peripheriekomponenten, wie z.B. zu einem handhaltbaren Datenerfassungsgerät, welches insbesondere als Datenlogger oder Feldrechner ausgebildet sein kann.

Vermessungsgeräte mit einer weiteren Ausbaustufe weisen eine Feinanzielungseinheit und eine automatische Zielfeinanzielungs- oder Zielverfolgungs-Funktion für als Ziel-Reflektor dienende Prismen (ATR: "Automatic Target Recognition") auf. Dafür sind gängigerweise eine separate ATR-Lichtquelle, z.B. eine weitere Laserquelle, zur Emission eines ATR-Messstrahls oder Feinanzielungsstrahls und ein für die Emissionswellenlänge dieser Lichtquelle sensitiver flächenhafter ATR-Detektor (z.B. CCD-Flächensensor) zusätzlich im Teleskop integriert.

Im Rahmen der ATR-Feinanziel- und ATR-Zielverfolgungs-funktion wird dabei in Richtung der optischen Zielachse der Visiereinrichtung der ATR-Messstrahl emittiert. Dieser wird beispielsweise an einem Rundum-Prisma (als Ziel-Reflektor) retro-reflektiert und der reflektierte Strahl vom ATR-Sensor erfasst. Je nach Abweichung der Ausrichtung der optischen Zielachse vom Rundum-Prisma weicht dabei auch die Auftreffposition der reflektierten Strahlung auf dem ATR-Sensor von einer zentralen Sensorflächenposition ab (d.h. der Reflexfleck des am Prisma retro-reflektierten ATR-Messstrahls auf dem ATR-Flächensensor liegt z.B. nicht im Zentrum des ATR-Flächensensors und trifft somit nicht auf einer Soll-Position auf, die z.B. anhand Kalibrierung als jene mit der optischen Zielachse korrespondierende Position festgelegt wurde).

Ist dies der Fall, so wird üblicherweise motorisiert die Ausrichtung der Anzieleinrichtung derart geringfügig nachgestellt, dass der am Prisma retro-reflektierte ATR-Messstrahl hochpräzise im Zentrum der Sensorfläche auf dem ATR-Flächensensor auftrifft (d.h. die Horizontal- und Vertikalwinkel der Visiereinrichtung werden derart iterativ geändert und angepasst, bis das Zentrum des Reflexflecks mit der Soll-Position auf dem ATR-Flächensensor zusammenfällt). Es wird dann oft davon gesprochen, dass das Ziel "eingelockt" ist.

Neben der ATR-Feinanzielfunktion kann auf ähnliche Weise und unter Verwendung derselben ATR-Komponenten (wie ATR-Lichtquelle und ATR-Detektor) auch eine automatische Zielverfolgungs-Funktionalität bereitgestellt sein. Nach erfolgter ATR-Feinanzielung (d.h. nachdem die Visiereinrichtung derart auf das Ziel ausgerichtet ist, dass das Zentrum des ATR-Messstrahlungs-Reflexfleck mit der - mit der Zielachse korrespondierenden - Soll-Position auf dem ATR-Flächensensor zusammenfällt) kann dann die Visiereinrichtung weiterhin derart Bewegungen des Zieles "live" und entsprechend schnell nachgeführt werden, dass das Zentrum des ATR-Messstrahlungs-Reflexfleck weiterhin möglichst genau und stets auf der Soll-Position auf dem ATR-Flächensensor bleibt.

Zur Sicherstellung des Funktionierens der automatischen Anzielung basierend auf Auswertung der Position des Reflexflecks des am Prisma retro-reflektierten ATR-Messstrahls auf dem ATR-Flächensensor ist es erforderlich, vor Funktionsstart die Anzieleinrichtung zumindest derart ungefähr und grob auf den Ziel-Reflektor auszurichten, dass der ATR-Messstrahl überhaupt auf dem Prisma und von dort reflektiert auf dem ATR-Flächensensor auftrifft. Mit anderen Worten muss das Ziel zuerst einmal aufgefunden werden, so dass die Visiereinrichtung zumindest grob auf das Ziel ausgerichtet werden kann. Ein solches Zielauffinden ist neben dem erstmaligen zu Messbeginn erfolgenden Grobausrichten auch erforderlich, wenn sich das Ziel derart ruckartig und schnell bewegt, dass es aus dem Sichtbereich des ATR-Detektors verschwindet (d.h. keine am Ziel reflektierte ATR-Messstrahlung mehr auf dem ATR-Flächensensor auftrifft) und damit der "lock-on" verloren gegangen ist. Andere Ursachen für eine Unterbrechung der optischen Verbindung zwischen Totalstation und Zielobjekt können beispielsweise ungünstige Umweltbedingungen (Niederschläge, Nebel, Staub etc.) oder schlicht Sichthindernisse, welche die optische Verbindung blockieren, sein.

Das ungefähre Ausrichten der Anzieleinrichtung auf das Zielobjekt, so dass der von diesem reflektierte ATR-Messstrahl auf den ATR-Sensor auftrifft, kann z.B. mittels einer manuellen Anzielung des Ziel-Reflektors basierend auf Augenmass erfolgen. Üblicherweise sind jedoch die heute gebräuchlichen, automatisierten Theodoliten oder Totalstationen mit einer optoelektronischen Zielsuch- und Positionierungsvorrichtung, im folgenden Automatische Zielerfassungs- oder Zielauffindungseinheit (AZE) genannt, bestückt. Solche Theodolite sind in der Lage, den Zielpunkt automatisch anzufahren und meist auch seine Position zumindest grob zu bestimmen. Mittels der AZE wird also das die Anzieleinrichtung bzw. die Zielachse automatisch zumindest derart grob auf das Zielobjekt ausgerichtet, dass dann mittels der ATR-Komponenten eine Feinanzielung und/oder Zielverfolgung möglich ist. Im Fall einwandfreier Funktion ist die Zeitersparnis mit solchen automatisierten Instrumenten gegenüber einem händischen Grobausrichten erheblich.

Ein geodätisches Vermessungssystem mit einer AZE des Stands der Technik wird beispielsweise in der US 6,035,254 vorgeschlagen. Gemäss dieser Patentschrift sind die Totalstation als Vermessungsgerät und das Zielobjekt jeweils ausgestattet mit einem Empfänger zum Empfang von GPS-Daten. Positionsinformationen für eine Abschätzung der Position des Zielobjekts aus empfangenen GPS-Daten werden an die Totalstation übermittelt, woraus seitens der Totalstation bestimmt wird, wie die Totalstation ausgerichtet werden muss für eine Anvisierung des Zielobjekts. Eine solche satellitengestützte AZE erfordert allerdings freie Sichtlinie zu mehreren Satelliten. Damit ist nachteilig der Einsatz in Häuserschluchten, unter Bäumen oder Brücken, oder im Innern von Tunneln oder Gebäuden eingeschränkt bzw. unmöglich. Zudem ist nachteilig ein Anvisieren eines bewegten Ziels nicht oder zumindest nicht robust möglich.

Die Europäische Patentschrift EP 1,329,690 offenbart ein Verfahren zum automatischen Auffinden eines geodätischen Zielobjekts, wobei von einer Strahlungssendeeinheit einer AZE, z.B. mittels einer Pulslaserdiode, Strahlung erzeugt wird, die in einem senkrecht orientierten Fächer emittiert wird, welcher horizontal verschwenkt wird. Trifft die AZE-Strahlung auf dem Ziel auf, wird ein Teil der Strahlung reflektiert und von einer Empfangseinheit empfangen, woraus ein Horizontalwinkel zum Ziel bestimmt wird. Nachteilig ist, dass auch mit dem Verfahren gemäss der EP 1,329,690 ein Anvisieren eines bewegten Ziels nicht oder zumindest nicht robust möglich ist.

Aufgabe der vorliegenden Erfindung ist also die Bereitstellung einer verbesserten Vorrichtung zum automatischen Auffinden eines einen Zielpunkt definierenden Zielobjekts.

Eine weitere Aufgabe der vorliegenden Erfindung ist die Bereitstellung einer Vorrichtung, mittels derer ein bewegtes einen Zielpunkt definierendes Zielobjekt automatisch auffindbar ist.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen sowie der Beschreibung einschliesslich der Figurenbeschreibungen zu entnehmen. Alle dargestellten oder in dieser Schrift anderweitig offenbarten Ausführungsformen der Erfindung sind miteinander kombinierbar, wenn nicht ausdrücklich anders festgestellt.

Die vorliegende Erfindung betrifft Vermessungssysteme zur Bestimmung der Position eines Zielpunkts. Das System weist ein Vermessungsgerät, vorzugsweise ausgebildet als Totalstation, Theodolit oder Tachymeter, und ein den Zielpunkt definierendes Zielobjekt auf. Das Zielobjekt ist vorzugsweise als Retroreflektor ausgebildet. Weiter weist das Vermessungssystem auf eine Steuer- und Auswerteeinheit mit Auswerte-, Datenverarbeitungs- und Steuerungsfunktionalität, eine erste Strahlquelle zur Erzeugung von Zielauffindungsstrahlung, vorzugsweise in Form von modulierter Laserstrahlung, und Mittel zur multidirektionalen Emission der Zielauffindungsstrahlung in den freien Raum. Unter multidirektional ist hierbei zu verstehen, dass Zielauffindungsstrahlung gleichzeitig oder beinahe gleichzeitig in verschiedene Richtungen emittierbar ist, z.B. in Form eines Strahlfächers oder Strahlkegels, wobei der Fächer oder Kegel durch ein Aufweiten oder ein rasches Verschwenken eines Strahls erzeugt wird. Optional sind dabei die erste Strahlquelle und die Emissionsmittel am Vermessungsgerät angeordnet.

Das Vermessungsgerät weist auf eine eine Zielachse definierende Anzieleinrichtung, vorzugsweise ein Zielfernrohr und Mittel zum Ausrichtungsändern der Ausrichtung der Zielachse um eine erste, vorzugsweise vertikale, Achse und um eine zweite Achse, welche vorzugsweise senkrecht zur ersten Achse steht. Zudem weist das Vermessungsgerät, vorzugsweise als Teil einer Zielauffindungseinheit, einen photosensitiven Liniensensor zur Detektion von Zielauffindungsstrahlung auf. Der Empfangsbereich des Liniensensors hat dabei die Form eines, vorzugsweise vertikalen, Empfangsfächers. Die Zielachse steht in definierter räumlicher Bezugsrelation zur Empfangsfächerebene, vorzugsweise indem sie parallel zur Empfangsfächerebene ist oder in der Empfangsfächerebene liegt. Die räumliche Bezugsrelation ist dabei definiert veränderbar oder Zielachse und Empfangsfächer sind fix zueinander angeordnet. Vorzugsweise sind Zielachse und Empfangsfächer zumindest in der horizontalen Richtung zueinander fix, wobei die Mittel zum Ausrichtungsändern der Zielachse in horizontaler Richtung gleichzeitig auch in gleichem Mass die Ausrichtung des Empfangsfächers ändern.

Weiter weist das Vermessungsgerät, vorzugsweise als Teil einer Zielfeinanzielungseinheit, eine zweite Strahlquelle zur Erzeugung von Feinanzielungsstrahlung auf, vorzugsweise als Laserstrahlung, und Mittel zur Emission der Feinanzielungsstrahlung koaxial zur Zielachse in Form eines Strahlkegels mit kleinem Öffnungswinkel auf. Der Öffnungswinkel des Strahlkegels ist vorzugsweise erheblich geringer als derjenige des Empfangsfächers des Liniensensors und beträgt z.B. maximal 10°, vorzugsweise 5°, im Speziellen maximal 2°. Weiter weist das Vermessungsgerät einen photosensitiven Flächensensor, vorzugsweise einen CMOS-2D-Sensor, zur Detektion von vom Zielobjekt reflektierter Feinanzielungsstrahlung auf.

Erfindungsgemäss ist die Steuer- und Auswerteeinheit ausgebildet zum Verfolgen des sich relativ zum Vermessungsgerät bewegenden Zielobjekts im Rahmen einer Zielauffindungsfunktionalität. Hierzu erfolgen im Rahmen der Zielauffindungsfunktionalität automatisch gesteuert durch die Steuer- und Auswerteeinheit entsprechend einem definierten Algorithmus unter fortlaufender Emission von Zielauffindungsstrahlung fortlaufend die Schritte Detektion von vom Zielobjekt ausgehender Zielauffindungsstrahlung mit dem Liniensensor und erste Ausrichtungsänderung der Zielachse um die erste Achse in Abhängigkeit der detektierten Zielauffindungsstrahlung, so dass die Zielachse die Bewegungstendenz des Zielobjekts verfolgt.

Unter "vom Zielobjekt ausgehend" wird hierbei verstanden, dass das Zielobjekt selbst Zielauffindungsstrahlung emittiert (das Zielobjekt weist die erste Strahlquelle auf) und/oder das Zielobjekt gestrahlte Zielauffindungsstrahlung reflektiert (das Vermessungsgerät weist die erste Strahlquelle auf). Unter Bewegungstendenz wird die Bewegung des Zielobjekts in wenigstens einer Raumrichtung verstanden oder die Projektion der Bewegung des Zielobjekts in eine oder zwei Richtungen des internen Koordinatensystems des Vermessungsgeräts bzw. -systems. Z.B. ist die Bewegungstendenz die Bewegung des Zielobjekts in horizontaler Richtung, oder die Bewegung des Zielobjekts, wie sie in einer vertikalen Projektionsebene vom Vermessungsgerät "gesehen" wird, ohne eine Bewegungskomponente in Richtung der Sichtachse, also ohne den Bewegungsanteil des Zielobjekts, der zur Veränderung der Entfernung zwischen Zielobjekt und Vermessungsgerät führt.

Um von vom Zielobjekt ausgehende Zielauffindungsstrahlung detektieren zu können, muss die Relativlage von Vermessungsgerät und Zielobjekt derart sein, dass vom Zielobjekt ausgehende Zielauffindungsstrahlung vom Liniendetektor empfangbar ist. Ist dies nicht von vorneherein die Ausgangslage, wartet das Vermessungsgerät im Rahmen der Zielauffindungsfunktionalität passiv ab, während Zielauffindungsstrahlung emittiert wird, bis das Zielobjekt aufgrund seiner eigenen Bewegung eine derartige zum Empfang von Zielauffindungsstrahlung geeignete Lage erreicht hat, bis also z.B. der Retroreflektor die vom Vermessungsgerät emittierte Zielauffindungsstrahlung kreuzt, so dass reflektierte Zielauffindungsstrahlung in den Sichtbereich des Liniendetektors kommt und detektierbar ist.

Alternativ erfolgt im Rahmen der Zielauffindungsfunktionalität eine Initialausrichtungsänderung der Zielachse um die erste Achse, so dass vom Zielobjekt ausgehende Zielauffindungsstrahlung vom Liniendetektor empfangen wird. Mit anderen Worten wartet bei dieser Alternative das Vermessungsgerät nicht passiv ab, sondern verändert aktiv, während Zielauffindungsstrahlung emittiert wird, nach einem vorgegebenen Schwenkprofil -z.B. ein einfaches kontinuierliches und gleichmässiges Verschwenken in eine horizontale Schwenkrichtung- die Ausrichtung der Zielachse solange, bis Zielauffindungsstrahlung empfangen wird. Optional erfolgt die Initialausrichtungsänderung derart, dass bezogen auf die Ausgangsausrichtung der Zielachse in eine Richtung maximal innerhalb eines begrenzten Winkelbereichs verschwenkt wird, z.B. ein Winkelbereich von 30°, 45° oder 90°. Wird bis zum maximal festgesetzten Schwenkwinkel keine Zielauffindungsstrahlung empfangen, wird umgeschwenkt, so dass die Initialausrichtungsänderung in die entgegengesetzte Richtung erfolgt. Das Verschwenken in die andere Richtung erfolgt entweder unbegrenzt solange bis Zielauffindungsstrahlung empfangen wird oder von vorneherein festgesetzt ebenfalls maximal nur innerhalb eines begrenzten Winkelbereichs von beispielsweise -30°, - 45° oder -90° bezogen auf die Ausgangsausrichtung, mit anschliessendem erneuten Umschwenken bei gegebenenfalls vergrössertem maximalen Winkelbereich (z.B. 120° oder 180°) .

Vorzugsweise erfolgt im Rahmen der Zielauffindungsfunktionalität eine Verfolgung der horizontalen Bewegung als Bewegungstendenz (oder kurz: horizontale Bewegungstendenz). Optional wird zudem die vertikale Bewegung verfolgt, so dass sich die Bewegungstendenz aus zwei Raumrichtungen zusammensetzt. Unter Bewegungstendenz ist zudem weiter zu verstehen, dass nicht notwendigerweise jede Kleinstbewegung des Ziels verfolgt wird, sondern vielmehr die Bewegung des Zielobjekts im Generellen verfolgt wird, ohne einzelne "Bewegungsspitzen" oder Bewegungsschwankungen zu beachten, wie sie z.B. durch Erschütterungen oder Zittern des Zielobjektträgers, beispielsweise einer Baumaschine oder bedingt durch das Gehen eines Benutzers, vorkommen können.

Die Verfolgung der Bewegungstendenz erfolgt vorzugsweise derart, dass damit vorteilhaft trotz der Bewegung des Zielobjekts oder des Nicht-Still-Stehens des Zielobjekts ermöglicht ist, dass die Zielachse zumindest derart grob auf das Zielobjekt ausgerichtet werden kann, dass vom Zielobjekt reflektierte Feinanzielungsstrahlung vom Flächensensor detektiert wird. Hierzu erfolgt im Rahmen der Zielauffindungsfunktionalität fortlaufend eine Emission der Feinanzielungsstrahlung in Richtung der Zielachse. Zudem erfolgt als weitere Option neben der ersten Ausrichtungsänderng eine zweite Ausrichtungsänderung der Zielachse um die zweite Achse, also vorzugsweise um die horizontale Achse.

Die Zielauffindungsfunktionalität wird dann wenigstens solange ausgeführt, bis die genannte grobe Ausrichtung der Zielachse realisiert ist. Mit anderen Worten erfolgt durch das Ausrichtungsändern um die erste Achse optional eine erste, vorzugsweise horizontale, Ausrichtung der Zielachse und durch die zusätzliche und wenigstens zeitweilig simultane Ausrichtungsänderung um die zweite Achse eine zweite, vorzugsweise vertikale, Ausrichtung der Zielachse, so dass insgesamt die Zielachse wenigstens derart ungefähr auf das sich bewegende Ziel ausgerichtet ist, dass wenigstens einmal vom Zielobjekt reflektierte Feinanzielungsstrahlung vom Flächensensor detektiert wird, so dass das Ziel also aufgefunden ist. Ist dies der Fall, kann das Ziel "eingelockt" werden und es kann zur weiteren, exakten Verfolgung der Bewegung Ziels in beide Richtungen zum Ziel die ATR verwendet werden. Mit anderen Worten folgt also die Zielachse mittels der Zielauffindungsfunktionalität solange der Bewegungstendenz des Zielobjekts, bis Feinanzielungsstrahlung vom Flächensensor detektiert wird oder das Zielobjekt "eingelockt" ist.

Als Option erfolgt im Rahmen der Zielauffindungsfunktionalität anhand detektierter Feinanzielungsstrahlung eine Prädiktion der Bewegung des Zielobjekts. Hierbei erfolgt die Vorhersage der Bewegung vorzugsweise basierend auf wenigstens zwei, im Speziellen wenigstens drei, anhand detektierter Feinanzielungsstrahlung ermittelter Richtungen zum Zielobjekt und/oder Zielobjektpositionen. Somit wird bei dieser Fortbildung die Zielauffindungsfunktionalität wenigstens solange ausgeführt bis wenigstens zwei oder drei Detektionsvorgänge von Feinanzielungsstrahlung erfolgt sind, wobei anhand eines Detektionsvorgangs eine 2D-Zielrichtung und/oder eine 3D-Zielposition (z.B. durch eine zusätzliche Distanzmessung) ermittelt wird. Optional erfolgt bei diesen Ausführungsformen das "Einlocken" basierend auf der geschätzten Bewegung oder einer daraus abgeleiteten geschätzten Zielposition.

Optional wird die Geschwindigkeit, mit der die erste Ausrichtungsänderung erfolgt, dynamisch an die Bewegung des Zielobjekts, insbesondere dessen Winkelgeschwindigkeit relativ zum Vermessungsgerät, angepasst. Die Zielgeschwindigkeit ist z.B. wenigstens implizit anhand der Zeitdauer zwischen zwei Detektionsvorgängen bei einem pendelnden ersten Ausrichtungsändern ermittelbar oder abschätzbar. Alternativ oder zusätzlich ist die Geschwindigkeit der zweiten Ausrichtungsänderung abgestimmt auf die Geschwindigkeit der ersten Ausrichtungsänderung, vorzugsweise dergestalt, dass die Feinanzielungsstrahlung einen Raumbereich sukzessive lückenlos überstreicht oder abdeckt, was beispielsweise dadurch erzielt wird, dass die erste Ausrichtungsänderung mit einer viel schnelleren Rate erfolgt als die zweite Ausrichtungsänderung. Dadurch wird erreicht, dass trotz der relativen groben Ausrichtung der Zielachse in Bezug auf die erste Achse (durch das erste Ausrichtungsändern) bei der Zielsuche keine Bereiche auftreten, in denen sich das Ziel zwar möglicherweise befindet, die jedoch (durch das zweite Ausrichtungsändern) ansonsten nie von Feinanzielungsstrahlung bestrahlt würden, sondern (bei horizontaler zweiter Achse) nur "darüber" oder "darunter" und damit immer am Zielobjekt vorbei bestrahlt würde, weshalb kein Detektieren von Feinanzielungsstrahlung und "Einlocken" möglich wäre.

In einigen Ausführungsformen erfolgt die erste Ausrichtungsänderung pendelnd zwischen zwei Umkehrpunkten in zwei entgegengesetzte Schwenkrichtungen, wobei ein jeweiliger Umkehrpunkt dynamisch festgelegt wird in Abhängigkeit einer Ausrichtung der Zielachse, bei der Zielauffindungsstrahlung mit dem Liniendetektor detektiert wird. Es erfolgt also eine alternierende Bewegungsumkehr der Ausrichtungsänderung in Abhängigkeit von detektierter Zielauffindungsstrahlung, wobei diese Bewegungsumkehr unabhängig von einer etwaigen Bewegungsumkehr des Zielobjekts selbst ist, sondern auch bei gleich bleibender Bewegungsrichtung des Ziels erfolgt. Dadurch kann auch bei Vermessungsgeräten mit einem Liniensensor mit z.B. vertikalem Empfangsbereich völlig ohne horizontalem Auflösungsvermögen der Bewegung des Ziels gefolgt werden, da immer wieder vom Ziel ausgehende Zielauffindungsstrahlung empfangen wird, weil die Zielachse durch das derartige erste Ausrichtungsändern mit einer Hin- und Herbewegung der Zielachse im Mittel fortwährend zumindest grob und bezüglich einer Richtung zum Zielobjekt zeigt und Zielauffindungsstrahlung immer wieder in den Empfangsfächer gelangt (eine grössere Winkelgeschwindigkeit des ersten Ausrichtungsändern als diejenige des Zielobjekts vorausgesetzt) .

Als Option weist der Liniensensor und damit der Empfangsbereich eine Strukturierung in wenigstens zwei, vorzugsweise vertikale und/oder horizontale, Sektoren auf, wodurch eine zusätzliche Ortsinformation empfangbar ist. Dies ist vorzugsweise realisiert mittels einer strukturierten Blende mit einem photosensitiven Element und/oder einer strukturierte, photosensitiven Empfangsfläche, im Speziellen mit einem linearen Array aus photosensitiven Elementen und einer Blende.

Je nach Strukturierung wird in Fortbildungen die zusätzliche Ortsinformation im Rahmen der Zielauffindungsfunktionalität verwendet, um die, vorzugsweise horizontale, Schwenkrichtung der ersten Ausrichtungsänderung festzulegen. Beispielsweise wird die Schwenkrichtung an die, vorzugsweise horizontale, Bewegungstendenz des Zielobjekts angepasst. Weist der Liniensensor z.B. eine horizontale Strukturierung auf, ist damit beispielsweise eine zusätzliche Information über die relative horizontale Winkellage des Ziels empfangbar oder der Liniesensor verfügt über ein zusätzliches, wenngleich sehr beschränktes, horizontales Auflösungsvermögen, was die Bestimmung einer horizontalen Bewegungsrichtung des Ziels erlaubt. Dies ermöglicht, die horizontale Bewegungstendenz des Ziels auch ohne die oben beschriebene Pendelbewegung zu verfolgen. Alternativ oder zusätzlich wird die zusätzliche Ortsinformation im Rahmen der Zielauffindungsfunktionalität verwendet, damit die erste Ausrichtungsänderung zusätzlich um die zweite Achse in Abhängigkeit der Ortsinformation erfolgt, so dass die Zielachse in Abhängigkeit der detektierten Zielauffindungsstrahlung die Bewegungstendenz des Zielobjekts in zwei Richtungen, vorzugsweise horizontal und vertikal, verfolgt. Beispielsweise durch eine grobe vertikale Strukturierung des Liniensensor kann zusätzlich eine grobe vertikale Lage des Ziels empfangen werden und die Zielachse in Abhängigkeit davon derart grob vertikal ausgerichtet werden. Die zweite Ausrichtungsänderung erfolgt dann beispielsweise im Rahmen der durch diese grobe vertikale Ausrichtung bzw. Strukturierung des Empfangsbereichs vorgegebenen vertikalen Winkelbereich.

Als Option weist das Vermessungsgerät die erste Strahlquelle und die Mittel zur multidirektionalen Emission der Zielauffindungsstrahlung auf. Die erste Strahlquelle und die Mittel zur multidirektionalen Emission der Zielauffindungsstrahlung sind also in derartigen Ausführungsformen vermessungsgerätseitig angeordnet. Hierbei sind die Mittel vorzugsweise dergestalt ausgebildet, dass ein, im Speziellen in horizontaler Richtung, verschwenkbarer, im Speziellen vertikaler, Sendefächer emittierbar ist, wobei die Zielachse in definierter, optional fixer, räumlicher Bezugsrelation zur Sendefächerebene steht, insbesondere parallel zur Sendefächerebene ist oder in der Sendefächerebene liegt. Optional weist der Sendefächer einen, insbesondere variablen, Öffnungswinkel zwischen 20° und 70°, insbesondere zwischen 30° und 50° auf und/oder die Mittel zur multidirektionalen Emission weisen eine Zylinderlinse und/oder ein Mikrolinsenarray und/oder ein diffraktives optisches Element auf.

In einer Fortbildung des erfindungsgemässen Vermessungssystems wird im Rahmen der Zielauffindungsfunktionalität anhand von detektierter Zielauffindungsstrahlung und/oder detektierter Feinanzielungsstrahlung eine Distanz zum Zielpunkt bestimmt, vorzugsweise mittels Pulslaufzeitverfahrens. Die bestimmte Distanz wird optional herangezogen, um im Rahmen der Zielauffindungsfunktionalität anhand der bestimmten Distanz eine Identifizierung des Zielobjekts (was es von anderen evtl. vorhandenen Zielobjekten unterscheidbar machen kann) und/oder eine Bestimmung einer, insbesondere groben, Position des Zielobjekts durchzuführen.

In einer weiteren Fortbildung ist die Zielauffindungsstrahlung gepulst und im Rahmen der Zielauffindungsfunktionalität erfolgt anhand der Anzahl der bei einem Detektionsvorgang detektierten Impulse der detektierten Zielauffindungsstrahlung eine Bestimmung einer, vorzugsweise horizontalen, Bewegungsrichtung des Zielobjekts, wobei optional zusätzlich anhand der Impulsanzahl eine Geschwindigkeit der Bewegung des Zielobjekts geschätzt wird.

Als weitere Option sendet im Rahmen der Zielauffindungsfunktionalität das Zielobjekt drahtlos, insbesondere per Lichtsignal oder Funkverbindung, ein Identifizierungssignal an die Steuer- und Auswerteeinheit, wodurch es von weiteren Zielobjekten unterscheidbar ist.

Alternativ oder zusätzlich weist das erfindungsgemässe Vermessungssystem optional eine Exklusionsfunktionalität auf, mittels derer irrelevante Zielobjekte wie weitere Prismen oder ähnliche reflektierende Oberflächen unterdrückbar sind, so dass sie nicht anstelle des tatsächlich interessierenden und zu verfolgenden Zielobjekts angezielt oder verfolgt werden. Eine derartige Exklusionsfunktionalität wird in der US Anmeldung 14,727,657 der gleichen Anmelderin, eingereicht am 1. Juni 2015 beschrieben. Im Rahmen der Exklusionsfunktionalität erfolgt z.B. vorab eine Rundum-(360°)-Suche nach allen Retroreflektoren, die sich im Sichtfeld des Vermessungsgeräts bzw. des Liniensensors befinden, wodurch die Positionen, zumindest mittels einer
Positionskoordinate, der Reflektoren vorbekannt sind. Solche Retroreflektoren, die für die aktuelle Vermessungsaufgabe nicht das interessierende Zielobjekt darstellen, dienen beispielsweise zur statischen Markierung von Messreferenzpunkten. Die Positionen dieser uninteressanten Reflektoren werden vom Vermessungssystem, z.B. in Form einer Negativliste, abgespeichert. Eine derartige Negativliste kann statt durch eine Suche auch durch anderweitige Informationen bereitgestellt werden, z.B. durch manuelle Erstellung durch einen Benutzer. Anhand der Negativliste sind diese abgewählten Reflektoren dann bei der Zielverfolgung exkludierbar und können damit gefiltert oder unterdrückt werden. Beispielsweise wird Zielauffindungsstrahlung, die von einer solchen abgespeicherten Position aus und damit von einem solchen uninteressanten Zielobjekt reflektiert wird, nicht zum ersten Ausrichtungsändern der Zielachse verwendet. Somit kann mit einer derartigen Fortbildung die Zielauffindung effizienter und ungestörter erfolgen.

Als weitere Option weist das Zielobjekt einen GNSS-Empfänger auf und die vor den fortlaufenden Schritten der Detektion und ersten Ausrichtungsänderung erfolgende Initialausrichtung erfolgt basierend auf einer vom GNSS-Empfänger ermittelten Position des Zielobjekts. Hierdurch ist ein robusteres und/oder schnelleres Erstausrichten auf das Ziel ermöglicht als bei einem Initialausrichten ohne Vorinformation.

Die vorliegende Erfindung betrifft weiter ein Vermessungsgerät, vorzugsweise ausgebildet als Totalstation, Theodolit oder Tachymeter, zur Bestimmung der Position eines Zielpunkts mittels eines den Zielpunkt definierenden Zielobjekts, wobei das Vermessungsgerät aufweist eine Steuer- und Auswerteeinheit mit Auswerte-, Datenverarbeitungs- und Steuerungsfunktionalität,eine Basis und eine um eine erste, insbesondere vertikale, Achse gegenüber der Basis verschwenkbares Oberteil. Das Oberteil weist auf eine eine Zielachse definierende und um eine zweite Achse verschwenkbare Anzieleinrichtung, vorzugsweise ein Zielfernrohr, und eine Zielauffindungseinheit mit einer ersten Strahlquelle zur Erzeugung von Zielauffindungsstrahlung, insbesondere modulierter Laserstrahlung, Mitteln zur Emission der Zielauffindungsstrahlung in den freien Raum, vorzugsweise in Form eines vertikalen Sendefächers mit einem Öffnungswinkel zwischen 20° und 70°, im Speziellen zwischen 30° und 50°, und einem photosensitiven Liniensensor zur Detektion von vom Zielobjekt reflektierter Zielauffindungsstrahlung, wobei der Empfangsbereich des Liniensensors die Form eines, vorzugsweise vertikalen, Empfangsfächers aufweist und die Zielachse in definierter räumlicher Bezugsrelation zur Empfangsfächerebene steht. Optional ist dabei die Zielachse parallel zur Empfangsfächerebene oder sie liegt in der Empfangsfächerebene, und/oder die Zielauffindungseinheit ist in fixer Positionsrelation zur Anzieleinrichtung angebracht und mit der Anzieleinrichtung um die zweite Achse verschwenkbar.

Das Oberteil weist weiter auf eine Zielfeinanzielungseinheit, welche in fixer Positionsrelation zur Anzieleinrichtung angebracht ist und mit der Anzieleinrichtung um die zweite Achse verschwenkbar ist, mit einer zweiten Strahlquelle zur Erzeugung von Feinanzielungsstrahlung, vorzugsweise Laserstrahlung, Mitteln zur Emission der Feinanzielungsstrahlung koaxial zur Zielachse in Form eines Strahlkegels mit kleinem Öffnungswinkel, und einem photosensitiven Flächensensor, insbesondere einem CMOS-2D-Sensor, zur Detektion von vom Zielobjekt reflektierter Feinanzielungsstrahlung. Der Öffnungswinkel des Strahlkegels ist vorzugsweise erheblich geringer als derjenige des Empfangsfächers des Liniensensors und beträgt z.B. maximal 10°, vorzugsweise 5°, im Speziellen maximal 2°.

Erfindungsgemäss ist die Steuer- und Auswerteeinheit ausgebildet zum Verfolgen eines sich relativ zum Vermessungsgerät bewegenden Zielobjekts, vorzugsweise eines Retroreflektors, im Rahmen einer Zielauffindungsfunktionalität, wozu im Rahmen der Zielauffindungsfunktionalität automatisch gesteuert durch die Steuer- und Auswerteeinheit entsprechend einem definierten Algorithmus unter fortlaufender Emission von Zielauffindungsstrahlung ein fortlaufendes alternierendes Verschwenken des Oberteils um die erste Achse pendelnd zwischen zwei Umkehrpunkten in zwei entgegengesetzte Schwenkrichtungen erfolgt. Dabei wird ein jeweiliger Umkehrpunkt dynamisch festgelegt in Abhängigkeit einer Ausrichtung des Oberteils, bei der vom Zielobjekt reflektierte Zielauffindungsstrahlung mit dem Liniensensor detektiert wird, so dass die Ausrichtung des Oberteils und damit die Zielachse die, vorzugsweise horizontale, Bewegungstendenz des Zielobjekts verfolgt.

Die vorliegende Erfindung betrifft zudem ein Verfahren zum automatischen Auffinden eines bewegten, einen Zielpunkt definierenden Zielobjekts mit einem erfindungsgemässen Vermessungsgerät, vorzugsweise mit einer Totalstation, einem Theodolit oder einem Tachymeter, wobei im Rahmen des Verfahrens das sich relativ zum Vermessungsgerät bewegende Zielobjekt verfolgt wird, indem fortlaufend Zielauffindungsstrahlung emittiert wird in Form eines, vorzugsweise vertikalen, Sendefächers, und das Oberteil um die erste Achse in zwei entgegengesetzte Schwenkrichtungen zwischen zwei Umkehrpunkten alternierend verschwenkt wird, wobei ein jeweiliger Umkehrpunkt dynamisch festgelegt wird in Abhängigkeit einer Ausrichtung des Oberteils, bei der vom Zielobjekt reflektierte Zielauffindungsstrahlung mit dem Liniensensor detektiert wird, so dass die Ausrichtung des Oberteils und damit die Zielachse die, vorzugsweise horizontale, Bewegungstendenz des Zielobjekts verfolgt.

Weiterer Gegenstand der vorliegenden Erfindung ist zudem ein Computerprogrammprodukt, das auf einem maschinenlesbaren Träger gespeichert ist, oder Computer-Datensignal, verkörpert durch eine elektromagnetische Welle, mit Programmcode, das oder der geeignet ist zur Durchführung des erfindungsgemässen Verfahrens, insbesondere wobei das Computerprogrammprodukt in einem erfindungsgemässen Vermessungssystem oder einem erfindungsgemässen Vermessungsgerät implementiert ist.

Das erfindungsgemässe Vermessungssystem und das erfindungsgemässe Verfahren werden nachfolgend anhand von in den Zeichnungen dargestellten konkreten Ausführungsbeispielen rein beispielhaft näher beschrieben, wobei auch auf weitere Vorteile der Erfindung eingegangen wird. Es versteht sich, dass diese dargestellten Figuren nur mögliche Ausführungsbeispiele schematisch darstellen.

Im Einzelnen zeigen
- Figur 1: ein Beispiel für ein erfindungsgemässes Vermessungssystem;
- Figuren 2a-f: ein Beispiel für die erste Ausrichtungsänderung im Rahmen der Zielauffindungsfunktionalität;
- Figur 3: ein Beispiel für eine Fortbildung des erfindungsgemässen Zielauffindens mit erster und zweiter Ausrichtungsänderung;
- Figur 4: ein Beispiel für einen erfindungsgemässen Verfahrensablauf zum Zielauffinden in einem Blockdiagramm;
- Figur 5: ein Ausführungsbeispiel für eine erfindungsgemässe Zielauffindungseinheit;
- Figur 6: ein Beispiel für eine erfindungsgemässe Fortbildung einer Zielauffindungseinheit;
- Figur 7: ein weiteres Beispiel für eine erfindungsgemässe Fortbildung einer Zielauffindungseinheit; und
- Figuren 8a-c: eine alternative Ausführungsform eines erfindungsgemässen Vermessungssystems.

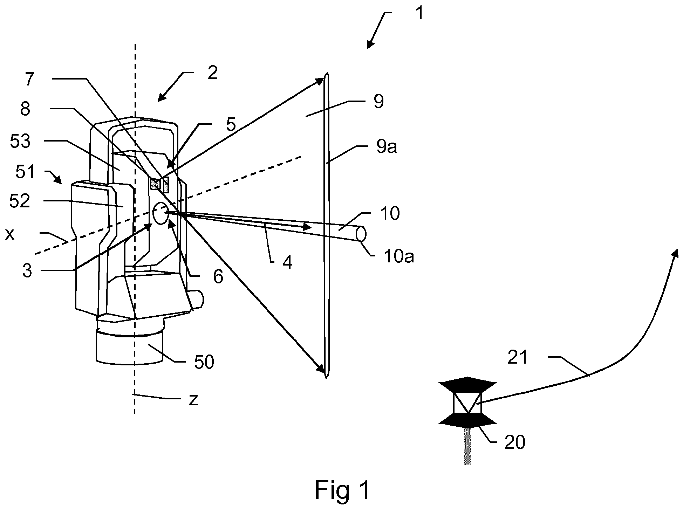

Figur 1 zeigt ein erfindungsgemässes Vermessungssystem 1 mit einem Vermessungsgerät 2, ausgebildet als Totalstation, und einem Zielobjekt 20, ausgebildet als Retroreflektor, welches einen zu vermessenden Zielpunkt definiert. Das Vermessungsgerät 2 weist eine Steuer- und Auswerteeinheit (nicht dargestellt), eine Basis 50 und ein Oberteil 51 auf. Das Oberteil 51 ist gegenüber der Basis 50 um eine erste Achse z verschwenkbar. Die erste Achse z ist als Stehachse vertikal ausgerichtet. Das Oberteil 51 weist eine Anzieleinrichtung 3 mit einer Objektiveinheit auf, beispielsweise einem Zielfernrohr oder einem Teleskop. Durch die Anzieleinrichtung 3 ist eine Zielachse 4 definiert. Die Ausrichtung der Zielachse 4 ist mittels Verschwenken des Oberteils 51 um die erste, vertikale Achse z veränderbar. Zudem ist die Ausrichtung der Zielachse 4 um eine zweite, im Beispiel horizontale, Achse x veränderbar. Hierzu weist das Oberteil 51 eine Stütze 52 und ein Kopfteil 53 auf, das gegenüber der Stütze 52 um die zweite Achse x verschwenkbar ist und in dem die Anzieleinheit 3 integriert ist.

Im Kopfteil 53 ist neben der Visiereinrichtung 3 eine Zielauffindungseinheit 5 (kurz: AZE) und eine Zielfeinanzielungseinheit 6 (kurz ATR) integriert. Durch die beispielhafte Anordnung der Zielauffindungseinheit 5, der Zielfeinanzielungseinheit 6 und der Anzieleinrichtung 3 im Kopfteil 53 stehen diese drei Einheiten in definierter und fixer Positionsrelation zueinander und sind gemeinsam um die erste Achse z und zweite Achse x verschwenkbar.

Alternativ zur dargestellten Anordnung ist die Zielauffindungseinheit 5 in der Stütze 52 integriert, so dass die räumliche Bezugsrelation der Zielachse 4 zum Empfangsfächer des Liniensensors 7 zwar definiert ist, jedoch keine fixe Positionsrelation vorliegt, da zwar mittels Verschwenkens des Oberteils 51 sowohl die Anzieleinheit 3 als auch die AZE 5 gemeinsam die horizontale Ausrichtung ändern, aber die Anzieleinheit 3 um die zweite Achse x verschwenkbar ist, nicht jedoch die AZE 5.

Die Zielauffindungseinheit 5 oder kurz AZE weist eine erste Strahlquelle 8 und einem photosensitiven Liniensensor 7 auf. Die erste Strahlquelle 8 erzeugt, vorzugsweise gepulste, Zielauffindungsstrahlung 9, beispielsweise modulierte Laserstrahlung. Die Zielauffindungseinheit oder AZE 5 weist Mittel auf, mittels welcher die Zielauffindungsstrahlung 9 in den freien Raum emittierbar ist. Die Emission erfolgt dabei durch die Mittel multidirektional, im Beispiel in Form eines vertikalen Sendefächers 9a, dessen Öffnungswinkel beispielsweise zwischen 20° und 70° oder 30° und 50° beträgt und variabel sein kann. Vom Zielobjekt 20 zurückgestrahlte Zielauffindungsstrahlung 9 ist vom Liniensensor 7 detektierbar, wobei der Liniensensor 7 einen Empfangsbereich hat, der die Form eines Fächers aufweist (nicht dargestellt) und die Fächerebene vorzugsweise wie diejenige des Sendefächers vertikal angeordnet ist. Die Zielachse 4 liegt beispielsweise in der Empfangsfächerebene. Alternativ ist die Zielachse 4 parallel zur Empfangsfächerebene oder steht in einer anderen fixen und definierten räumlichen Bezugsrelation zu dieser.

Die Zielfeinanzielungseinheit 6 oder kurz ATR-Einheit weist eine zweite Strahlquelle und einen Flächensensor auf (beide nicht dargestellt). Die zweite Strahlquelle erzeugt Feinanzielungsstrahlung 10, z.B. Laserstrahlung. Die Zielfeinanzielungseinheit 6 weist Mittel auf, mittels derer die Feinanzielungsstrahlung 10 koaxial zur Zielachse 4 in Form eines Strahlkegels 10a mit kleinem Öffnungswinkel emittierbar ist. Der Öffnungswinkel beträgt z.B. maximal 5° oder 2° und liegt beispielsweise bei genau 1,5°. Vom Zielobjekt 20 zurückgestrahlte Feinanzielungsstrahlung 10 ist vom Flächensensor detektierbar. Wie eingangs beschrieben, ist durch die Auftreffposition der reflektierten Feinanzielungsstrahlung 10 eine präzise Zielposition ableitbar und/oder das Kopfteil 53 und damit die Zielachse 4 und die Zielfeinanzielungseinheit 6 werden durch Verschwenken des Kopfteils 53 um eine oder beide Achsen z, x präzise auf das Zielobjekt ausgerichtet, so dass die Auftreffposition die Mitte des Flächensensors ist oder im Falle eines sich bewegenden Zielobjekts 20 wird die Zielachse 4 automatisch derart nachgeführt, dass die Auftreffposition weiterhin möglichst genau bei der Mitte bleibt ("lock-on").

Um ein "Einlocken" auf das Zielobjekt 20 zu erreichen, muss das Zielobjekt 20 zuerst einmal aufgefunden werden, d.h. die Zielachse 4 zuerst einmal zumindest grob auf das Zielobjekt 20 ausgerichtet sein, damit die Feinanzielungsstrahlung 10 überhaupt auf den Retroreflektor 20 trifft und somit auf den Flächensensor zurückreflektiert wird (was aufgrund des geringen Öffnungswinkels der Feinanzielungsstrahlung 10 in der Regel nicht von vorneherein der Fall ist). Aufgrund der definierten und wie im Beispiel gegebenenfalls fixen räumlichen Bezugsrelation von Sendefächer 9a und Empfangsfächer der AZE 5, Strahlkegel 10a der Feinanzielungsstrahlung 10 und Zielachse 4 kann bei zunächst unbekannter Relativlage von Zielobjekt 20 und Totalstation 2 zueinander eine Ausrichtung der Zielachse 4 auf das Zielobjekt 20 erreicht werden, indem zunächst das Oberteil 51 und damit der Sendefächer 9a soweit um die erste Achse z verschwenkt und damit auch die Ausrichtung der Zielachse 4 geändert werden, bis vom Zielobjekt 20 reflektierte Zielauffindungsstrahlung 9 vom Liniensensor 7 empfangen und detektiert wird. Hierdurch entspricht die horizontale Ausrichtung der Zielachse 4 der Richtung zum Ziel 20. Dann wird das Kopfteil 53 soweit um die zweite Achse x verschwenkt, bis die Feinanzielungsstrahlung 10 auf das Ziel 20 trifft und die Ausrichtung der Zielachse 4 auch in der Vertikalen der Richtung zum Ziel 20 entspricht.

Ein einmaliges horizontales Ausrichten der Zielachse 4 ist zur Zielauffindung allerdings nicht ausreichend, wenn sich das Zielobjekt 20 relativ zum Vermessungsgerät 2 bewegt, was z.B. dann der Fall ist, wenn das Zielobjekt 20 auf einem Vermessungsstab angebracht ist, der von einem Benutzer fortbewegt wird oder auf einem mobilen Fahrzeug angebracht ist, dessen Zielposition fortwährend oder in bestimmten zeitlichen Abständen bestimmt werden soll. Abgesehen vom Fall einer nur sehr geringfügigen oder langsamen Relativbewegung verlagert sich nämlich innerhalb der Zeitspanne des Verschwenkens der Zielachse 4 um die zweite Achse x die tatsächliche horizontale Richtung zum Zielobjekt 20 so schnell von der eingestellten horizontalen Ausrichtung der Zielachse 4, dass der Strahlkegel der Feinanzielungsstrahlung 10 nicht das Zielobjekt 20 trifft, sondern an diesem vorbeigeht.

Deshalb ist erfindungsgemäss die Steuer- und Auswerteeinheit derart ausgebildet, dass im Rahmen einer Zielauffindungsfunktionalität automatisch ein Verfolgen eines sich bewegenden Zielobjekts 20 erfolgt. Hierbei dient das beschriebene horizontale Ausrichten der Zielachse 4, bis vom Zielobjekt 20 reflektierte Zielauffindungsstrahlung 9 vom Liniensensor 7 empfangen wird, lediglich als eine Initialausrichtungsänderung der Zielachse 4 derart, dass (erstmalig) Zielauffindungsstrahlung 10 detektiert wird. Anhand der detektierten Zielauffindungsstrahlung 10 erfolgt dann eine weitere erste Ausrichtungsänderung um die erste Achse z bei fortlaufender Emission von Zielauffindungsstrahlung 10. Anschliessend wird erneut vom Ziel 20 reflektierte Zielauffindungsstrahlung 10 mittels des Liniensensors 7 detektiert und wiederum in Abhängigkeit der detektierten Zielauffindungsstrahlung 10 eine erste Ausrichtungsänderung der Zielachse um die erste Achse z, im Beispiel also in horizontaler Richtung, durchgeführt und so weiter. Hierdurch verfolgt die Zielachse 4 die Bewegungstendenz des Zielobjekts 20, dargestellt durch den Pfeil 21. Z.B. ist die Bewegungstendenz die Bewegung des Zielobjekts 20, wie sie in einer vertikalen Projektionsebene vom Vermessungsgerät 2 "gesehen" wird, ohne eine Bewegungskomponente zum Vermessungsgerät 2 hin oder weg.

Diese grobe Zielverfolgung in Abhängigkeit der detektierten Zielauffindungsstrahlung 10 wird optional im Rahmen der Zielauffindungsfunktionalität durchgeführt, während simultan das oben beschriebene Verschwenken des Kopfteils 53 erfolgt als zweite Ausrichtungsänderung der Zielachse 4 um die zweite Achse x, unter fortlaufender Emission von Feinanzielungsstrahlung 10, und erfolgt zumindest solange bis die Feinanzielungsstrahlung 10 auf das Ziel 20 trifft, also das bewegte Zielobjekt 20 aufgefunden ist. Mit anderen Worten wird also die Zielauffindungsfunktionalität solange ausgeführt, bis aufgrund der ersten und zweiten Ausrichtungsänderung der Zielachse 4 diese zumindest derart grob auf das Ziel 20 ausgerichtet ist, dass vom bewegten Ziel 20 reflektierte Feinanzielungsstrahlung 10 vom Flächensensor detektiert wird. Somit kann dann das Zielobjekt 20 "eingelockt" werden und mittels der Zielverfolgungsfunktionalität der ATR weiterverfolgt werden.

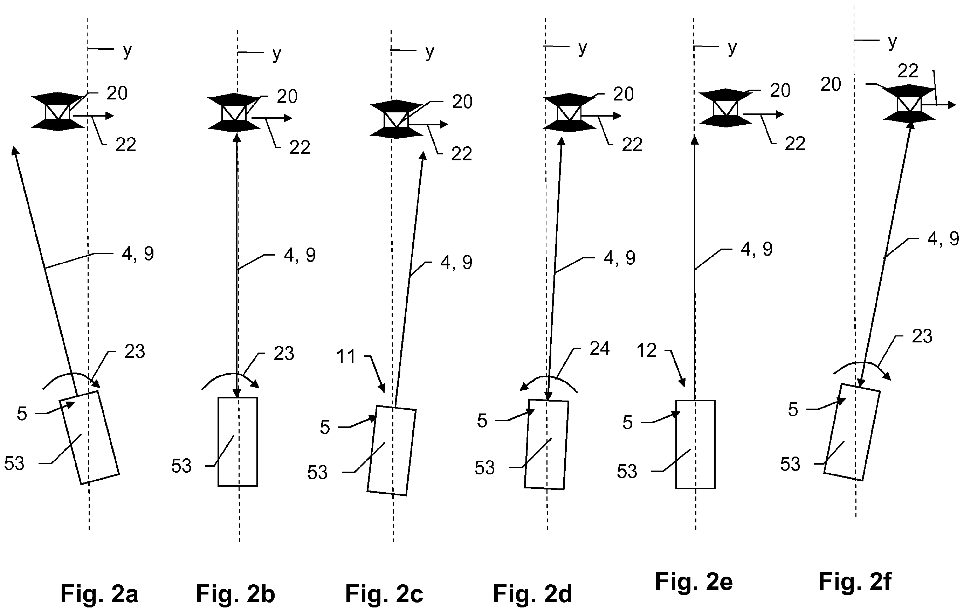

Die Figuren 2a-2f zeigen in einer Vogelperspektive ein erstes Beispiel für die erste Ausrichtungsänderung in Abhängigkeit der detektierten Zielauffindungsstrahlung 9 im Rahmen der Zielauffindungsfunktionalität. Dargestellt sind das Kopfteil 53 mit der Zielauffindungseinheit 5 und dem Zielobjekt 20 (das zur besseren Erkenntlichkeit aus anderer Perspektive dargestellt ist), das sich relativ zum (im Beispiel als stationär angenommen) Vermessungsgerät bzw. der Zielauffindungseinheit 5 bewegt, im Beispiel rein der Einfachheit halber als Bewegung rein quer zur y-Achse (symbolisiert durch den Pfeil 22). Die AZE 5 sendet fortwährend Zielauffindungsstrahlung 5 in Form eines vertikalen Sendefächers aus, wobei vom Zielobjekt 20 reflektierte Zielauffindungsstrahlung 9 über den ebenfalls vertikalen Empfangsfächer der AZE 5 empfangen und vom Liniensensor detektiert wird. Im dargestellten Beispiel der Vogelperspektive sind der Sendefächer und der Empfangsfächer gemeinsam als Pfeil dargestellt, wobei eine Pfeilspitze an beiden Enden (siehe Figuren 2b, 2d und 2f) symbolisiert, dass Zielauffindungsstrahlung 9 empfangen und auch detektiert wird. Rein der Einfachheit halber wird im Beispiel auch angenommen, dass die räumliche Bezugsrelation zwischen Empfangsfächer der AZE 5 und der Zielachse 4 derart ist, dass die Zielachse 4 in der Fächerebene liegt. Somit symbolisiert also der Strichpfeil auch die Zielachse 4.

In Figur 2a ist ein Verschwenken des Kopfteils 53 und damit der AZE 5 und der Zielachse 4 um die erste Achse z, im Beispiel also in der Horizontalebene, dargestellt, welches in eine erste Schwenkrichtung nach "rechts" erfolgt (Pfeil 23) und als Initialausrichtungsänderung der Zielachse 4 dient. Optional wird dabei zur vereinfachten oder schnelleren Ausrichten der Zielachse 4 hin zum Ziel 20 dieses mit einem GNSS-Empfänger versehen und die damit ermittelte Position des Ziels 20 für die Erstausrichtungsänderung verwendet. In der momentanen Relativlage von Zielobjekt 20 und Vermessungsgerät geht die Zielauffindungsstrahlung 9 "links" am Reflektor 20 vorbei.

In Figur 2b ist dargestellt, dass diese Initialausrichtungsänderung der Figur 2a soweit erfolgt ist, dass Zielauffindungsstrahlung 9 auf das Zielobjekt 20 trifft, reflektiert, empfangen und detektiert wird, wobei das Verschwenken in die erste Schwenkrichtung (Pfeil 23) dabei noch fortgesetzt wird. Alternativ zu einer Initialausrichtungsänderung der Zielachse 4 bzw. des Kopfteils 53 "wartet" das Vermessungsgerät unter andauernder Emission von Zielauffindungsstrahlung 9, bis das sich bewegende Zielobjekt die in Figur 2b dargestellte Relativlage erreicht hat (sozusagen in die Zielauffindungsstrahlung 9 "hineinläuft"), so dass also die in Figur 2b dargestellte Ausrichtung der Zielachse 4 (und des Kopfteils 53) die bis dahin statische Ausrichtung der Zielachse 4 darstellt.

In Figur 2c ist die Ausrichtung der Zielachse 4 ist derart, dass der Sendefächer nun "rechts" am Zielobjekt 20 vorbeigeht. Das Verschwenken in die erste Schwenkrichtung und damit die Initialausrichtungsänderung sind beendet und das Kopfteil 53 in Ruhe. Es ist ein erster Umkehrpunkt 11 der Schwenkbewegung erreicht. Der Umkehrpunkt 11 ist in Abhängigkeit der detektierten Zielauffindungsstrahlung 9 festgelegt oder genauer formuliert, in Abhängigkeit der Ausrichtung der Zielachse 4, bei der Zielauffindungsstrahlung 9 detektiert wird. Im Beispiel ist die Abhängigkeit derart, dass durch das Detektieren das Umkehren der Schwenkbewegung initiert wird und mit einer (u.a. trägheitsbedingten) gewissen Zeitverzögerung dann zum in der Figur 2c dargestellten kurzzeitigen Stillstand des Kopfteils 53 führt, bevor dann die Schwenkrichtung in die entgegengesetzte Richtung nach "links" erfolgt.

In Figur 2d ist dieses Verschwenken in die zweite, zur ersten entgegengesetzten, Schwenkrichtung (Pfeil 24) als Teil des erstes Ausrichtungsänderns, bei dem die Zielachse 4 nun nach "links" in ihrer Ausrichtung geändert wird, dargestellt. Dadurch überstreicht nun der Sendefächer erneut (im Beispiel ein zweites Mal) das Zielobjekt 20, so dass vom Zielobjekt 20 ausgehende Zielauffindungsstrahlung 9 empfangen und vom Liniensensor detektiert wird.

In Figur 2e ist die zur Figur 2c komplementäre Situation dargestellt: das Verschwenken in die zweite Schwenkrichtung (nach "links") ist gerade beendet und das Verschwenken am zweiten Umkehrpunkt 12 angekommen. Wie der erste Umkehrpunkt ist auch der zweite Umkehrpunkt 12 in Abhängigkeit der detektierten Zielauffindungsstrahlung 9 festgelegt und im Beispiel derart, dass die Schwenkbewegung über das Ziel 20 hinaus erfolgt, bevor die Schwenkbewegungsumkehr erfolgt. Die beiden Umkehrpunkte 11, 12 hängen dabei wie erläutert dynamisch von der Ausrichtung der Zielachse 4 bzw. des Oberteils des Vermessungsgeräts ab, bei der Zielauffindungsstrahlung 9 detektiert wird und sind somit abhängig von der Relativlage des Zielobjekts 20.

Figur 2f stellt den sich wiederholenden Fortgang des erfindungsgemässen ersten Ausrichtungsänderns der Zielachse dar und entspricht der Situation der Figur 2b: Das Verschwenken erfolgt nun wieder nach "rechts" (Pfeil 23), so dass nach einer von der Relativ- oder Winkelgeschwindigkeit des Zielobjekts 20 und der Geschwindigkeit des Ausrichtungsändern (also der Drehrate des Kopfteils 53) abhängigen Zeitspanne erneut Zielauffindungsstrahlung 9 auf das Ziel 20 trifft und detektiert wird. Vorzugsweise wird dabei die Geschwindigkeit des ersten Ausrichtungsänderns dynamisch oder adaptiv an die Zielobjektsgeschwindigkeit angepasst.

Die in den Figuren 2a-2f (genauer: in den Figuren 2b-2e) dargestellten Schritte werden fortlaufend wiederholt, so dass fortlaufend ein alternierendes Verschwenken des Oberteils und somit das erste Ausrichtungsändern alternierend erfolgen. Die Ausrichtung der Zielachse 4 pendelt zwischen den beiden Umkehrpunkten 11 und 12 hin und her, wobei sich die beiden Umkehrpunkten 11 und 12 dynamisch in Abhängigkeit der (Horizontal-)Richtung zum bewegten Ziel 20 verlagern (d.h. die Bewegungsumkehr an einem jeweiligen Umkehrpunkt erfolgt bei jeweils unterschiedlicher horizontaler Ausrichtung der Zielachse 4). Hierdurch verfolgt die Zielachse 4 die horizontale Bewegungstendenz des Ziels 20, im Beispiel also die Bewegung des Zielobjekts in horizontaler Richtung (symbolisiert durch den Pfeil 22), d.h. die Zielachse 4 folgt dem Kurs oder Trend der Bewegung 22 des Ziels 20, so dass die Zielachse 4 im Beispiel dem Ziel 20 nach "rechts" nachgeführt oder vielmehr mit dem Ziel 20 mitgeführt wird. Die mittlere Ausrichtung der Zielachse 4 (d.h. deren Ausrichtung ohne Berücksichtigung der Pendelbewegung durch das alternierende Verschwenken) entspricht damit immer zumindest grob der Richtung vom Vermessungsgerät zum sich bewegenden Zielobjekt 20.

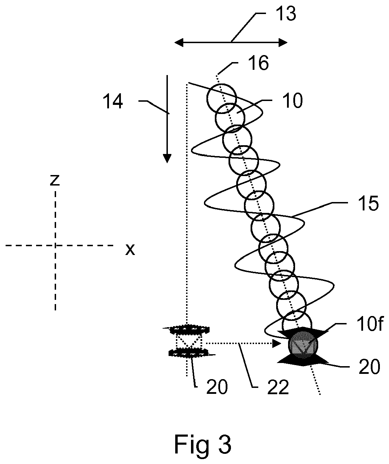

Figur 3 stellt in einer vertikalen Ebene die pendelnde Schwenkbewegung des Oberteils des Vermessungsgeräts um die erste Achse z durch die erste Ausrichtungsänderung 13 in Abhängigkeit der detektierten Zielauffindungsstrahlung und damit als Verfolgung der Bewegungstendenz 22 des Ziels 20 dar. Weiter ist in der Figur 3 dargestellt, dass im Rahmen der Zielauffindungsfunktionalität fortlaufend eine zweite Ausrichtungsänderung 14 der Zielachse um die zweite Achse x erfolgt, z.B. indem das Kopfteil des Vermessungsgeräts von oben nach unten geschwenkt wird. Somit ergibt sich durch die Überlagerung der ersten und zweiten Ausrichtungsänderung 13, 14 eine sinusartige Bewegung 15 der Zielachse, wobei die gestrichelte Linie 16 den Verlauf der mittleren Ausrichtung der Zielachse darstellt (gewissermassen stellt die Linie 16 eine Art Ausgleichsgerade dar). Dabei wird fortlaufend Feinanzielungsstrahlung 10 emittiert (bildlich dargestellt als Querschnitt des Strahlkegels, vgl. Figur 1). Durch die erste Ausrichtungsänderung 13, also der Pendelbewegung in der Horizontalen und damit im Mittel Ausrichtung der Zielachse in der Horizontalen auf das Ziel 20, und die zweite Ausrichtungsänderung 14, also der kontinuierlichen Vertikalbewegung von "oben" nach "unten, wird erreicht, dass nach mehr oder weniger kurzer Zeit Feinanzielungsstrahlung 10 auf das Zielobjekt 20 trifft, in der Figur 3 dargestellt als ausgefüllter Querschnitt 10f. Mit anderen Worten sorgt also das erfindungsgemässe Verfolgen der Bewegungstendenz 22 des Ziels 20 mittels der ersten Ausrichtungsänderung 13 dafür, dass auch bei einem sich bewegenden Ziel 20 die Zielachse horizontal (im Mittel) auf das Ziel 20 ausgerichtet ist, so dass die Zielachse und damit die Feinanzielungseinheit mittels der zweiten Ausrichtungsänderung 14 auch vertikal auf das Ziel 20 ausrichtbar ist und somit das Ziel 20 selbst bei einer schnellen Relativbewegung zwischen Ziel 20 und Vermessungsgerät auffindbar ist und "eingelockt" werden kann.

Die Geschwindigkeit der zweiten Ausrichtungsänderung 14 ist dabei vorteilhaft abgestimmt auf diejenige der ersten Ausrichtungsänderung 13, damit in der Vertikalbewegung der Feinanzielungsstrahlung 10 keine Lücken vorkommen, zwischen denen das Ziel 20 "durchschlüpfen" könnte, und also nicht aufgefunden würde. Dies ist in Figur 3 dadurch symbolhaft dargestellt, dass sich die Querschnitte der Feinanzielungsstrahlung 10, die für jeweils ein Detektionsvorgang (oder vielmehr Detektionsversuch, da bis zur letzten dargestellten Ausrichtung der Zielachse 10f aufgrund des vertikalen Vorbeizielens am Ziel 20 ja keine Feinanzielungsstrahlung 10 detektierbar ist) des Flächensensors stehen, überlappend aneinanderreihen. Somit wird also ein Raumbereich entlang der Linie 16 durch die Feinanzielungsstrahlung 10 nach und nach abgedeckt oder überstrichen.

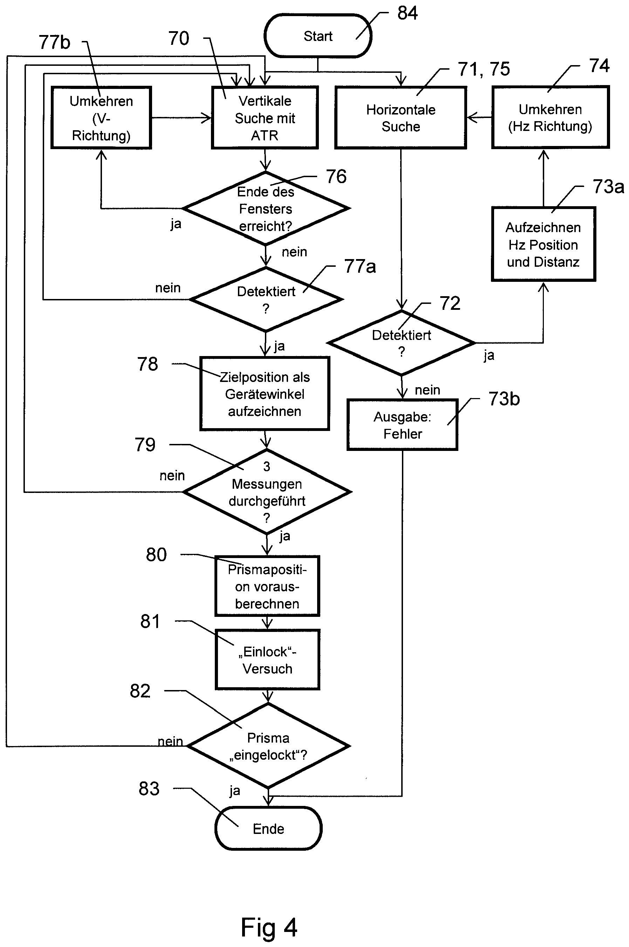

Figur 4 stellt schematisch einen beispielhaften erfindungsgemässen Verfahrensablauf zum automatischen Zielauffinden eines bewegten Ziels dar. Mit dem Start 84 der Zielauffindungsfunktionalität beginnt Initalausrichtung der Zielachse um die erste Achse im Beispiel als horizontale Bewegung 71. Wird das Ziel mittels der Zielauffindungsstrahlung detektiert (Feld 72), wird die horizontale Position (Richtung) und im Beispiel zusätzlich mittels Distanzmessung die Distanz bestimmt (Feld 73a).

Anschliessend wird als erste Ausrichtungsänderung die Schwenkrichtung umgekehrt (Feld 74) und die Zielachse horizontal in die Gegenrichtung verschenkt (Feld 75). Sollte selbst bei einem initalen 360°-Schwenk keine Strahlung detektiert werden, wird eine Fehlermeldung angezeigt (Feld 73b) und die Funktionalität beendet (Feld 83. Optional erfolgt dabei eine Filterung oder Exklusion von unerwünschten statischen Zielen, die neben dem zu verfolgenden Ziel detektierbar sind oder wären und deren Position zumindest in horizontaler Richtung hinterlegt ist, so dass Strahlung dieser Ziele nicht detektiert oder ignoriert wird oder die Emission von Zielauffindungsstrahlung bei Ausrichtung der Zielachse in Richtung der vorbekannten uninteressanten Ziele von vorneherein unterbrochen wird (im Ablaufschema nicht dargestellt).

Dieser Vorgang (Felder 72, 73a, 74, 75) wird fortlaufend wiederholt, während simultan mittels der ATR eine vertikale Suche durchgeführt wird (Feld 70), solange bis vom Ziel ausgehende Feinanzielungsstrahlung detektiert wird und anhand der detektierten Feinanzielungsstrahlung eine Zielposition bestimmt wird (Felder 77a und 78). (Im Fall, dass der Schwenkbereich um die zweite Achse voll ausgenutzt worden ist (Feld 76), ohne dass das Ziel detektiert wurde, wird die zweite Ausrichtungsänderung bei fortlaufender Emission von Feinanzielungsstrahlung fortgeführt, indem die Vertikalschwenkrichtung umgekehrt wird (Feld 77b)). Die Suche mit der Zielfeinanzielungseinheit (Feld 70), d.h. die zweite Ausrichtungsänderung bei gleichzeitiger Emission von Feinanzielungsstrahlung und die simultane Verfolgung der Bewegungstendenz des Ziels mit der Zielauffindungseinheit gemäss der Felder 72, 73a, 74, 75 wird im Beispiel so lange fortgeführt bis mittels der ATR drei Zielpositionen gemessen sind (Feld 79). Anhand dieser drei Zielpositionen wird eine Zielposition prädiziert (Feld 80) und basierend auf dieser vorhergeschätzten Zielposition ein "Einlocken" auf das Ziel versucht (Feld 81). Ist das "Einlocken" erfolgreich, wird das Zielauffindverfahren beendet (Feld 83), ansonsten fortgeführt, bis ein solches "Einlocken" erfolgreich ist.

Wie damit beispielhaft beschrieben, wird als Option die Zielauffindungsfunktionalität nicht mit dem erstmaligen Treffen des Ziels mit und Detektieren von Feinanzielungsstrahlung gestoppt, sondern zumindest fortgeführt, bis wenigstens zwei oder drei Detektionsvorgänge mit der Feinanzielungseinheit erfolgt sind. Dabei werden jeweils anhand der detektierten Feinanzielungsstrahlung Richtungen zum Ziel und/oder eine Position des Zielobjekts bestimmt, wobei die Position vorzugsweise mittels einer Distanzmessung anhand der Feinanzielungsstrahlung dreidimensional ist. Basierend auf diesen wenigstens zwei oder drei Richtungen oder Positionen und damit anhand detektierter Feinanzielungsstrahlung erfolgt dann durch die Steuer- und Auswerteeinheit eine Schätzung des weiteren Bewegungsverlaufs des Ziels. Es erfolgt also eine Vorhersage oder Prädiktion der Bewegung des Ziels.

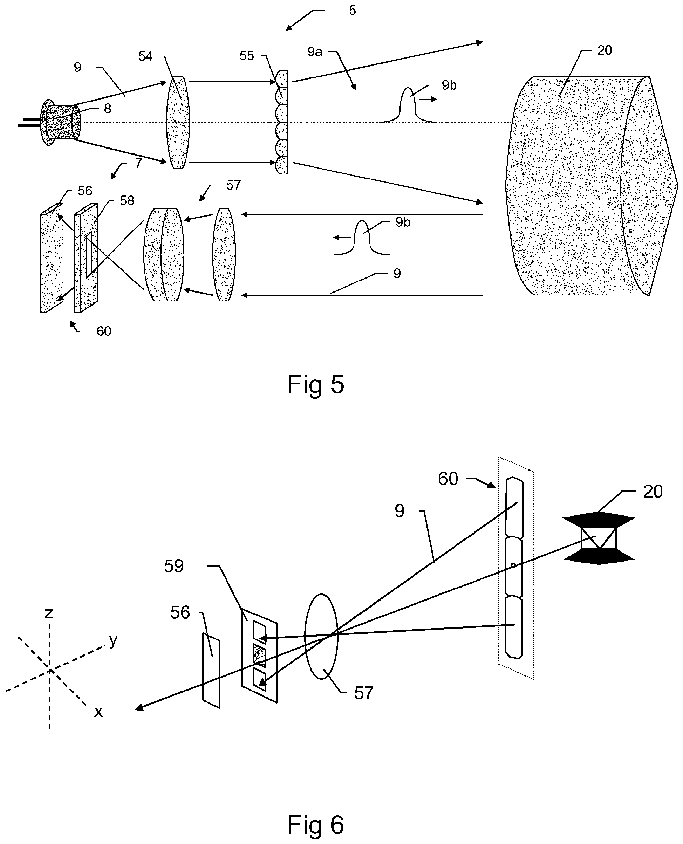

Figur 5 zeigt eine beispielhafte Ausführungsform einer AZE 5. Durch eine Pulslaserdiode als erste Strahlquelle 8 als Sendediode mit Impulsmodulation wird elektromagnetische Strahlung mit Pulsen 9b als Zielauffindungsstrahlung 9 erzeugt. Eine geeignete Pulsdauer beträgt beispielsweise 50 Nanosekunden. Optional erfolgt im Rahmen der Zielauffindungsfunktionalität eine Bestimmung der Distanz zum Ziel 20 anhand der Zielauffindungsstrahlung 9, was im Beispiel anhand der gepulsten Strahlung z.B. mittels Pulslaufzeitverfahren erfolgen kann. Die ermittelte Distanz wird als weitere Option verwendet, um das Ziel 20 zu identifizieren bzw. von anderen Zielen, die näher oder entfernter sind, zu unterscheiden, was das Zielauffinden robuster macht. In diesem Zusammenhang oder auch unabhängig hiervon wird die Distanz verwendet, um zusammen mit einer anhand des erfindungsgemässen Zielauffindens (Ausrichtung der Zielachse) bestimmten Richtung eine Grobposition des Ziels 20 zu bestimmen. Alternativ oder zusätzlich ist eine Identifizierung des Ziels 20 ermöglicht, indem dieses drahtlos ein Identifizierungssignal an die Steuer- und Auswerteeinheit sendet.

Da normalerweise während eines Detektionsvorgangs nicht nur ein Impuls detektiert wird sondern während eines Überstreichens des Zielobjekts 20 mit Zielauffindungsstrahlung 9 mehrere Impulse (z.B. 10-30) hintereinander detektiert werden, wird als weitere Option anhand der Anzahl der während eines Detektionsvorgangs detektierten Impulse auf die relative Bewegungsrichtung des Ziels 20 geschlossen. Bei gleichsinniger Bewegung von Zielobjekt 20 und Oberteil des Vermessungsgeräts, d.h. bei einer Schwenkrichtung, die mit der Bewegungsrichtung übereinstimmt (z.B. beide nach "links"; wobei wie beschrieben die Winkelgeschwindigkeit des Verschwenkens grösser ist als diejenige des Zielobjekts 20), wird eine relativ erhöhte Anzahl von Impulsen detektiert, da das Überstreichen länger dauert. Bei gegensinniger Bewegung und Schwenkrichtung entgegen der Zielbewegungsrichtung ist die Anzahl (z.B. im Vergleich zum Mittel bei ruhendem Ziel 20) vermindert. Somit ist aus der detektierten Impulsanzahl die Bewegungsrichtung des Ziels 20 ermittelbar. Als weitere Fortbildung kann zudem nach gleichem Prinzip bei bekannter Drehgeschwindigkeit des ersten Ausrichtungsänderns die Bewegungsgeschwindigkeit des Ziels 20 geschätzt werden.

Im Beispiel wird die erzeugte Strahlung 9 in einem senkrecht orientierten Fächer 9a emittiert, der vorrichtungsseitig durch eine Kombination aus einer Linse 54 und einem Zylinderlinsenarray 55 erzeugt wird. Alternativ können jedoch auch andere geeignete Komponenten verwendet werden, wie z.B. Mikrolinsenarrays oder diffraktive optische Elemente. Nach der Emission und einer Reflexion am Ziel 20, das beispielsweise einen Retroreflektor als ein Beispiel für einen geeigneten Reflektor aufweist, wird der reflektierte Puls 9b vom der Liniendetektor 7 empfangen. Dabei wird empfängerseitig das fächerartige Gesichtsfeld 60 durch eine Schlitzblende 58 vor einer Empfangsdiode als photosensitivem Element 56 zusammen mit einem Objektiv 57 mit zylindrischer Wirkung realisiert.

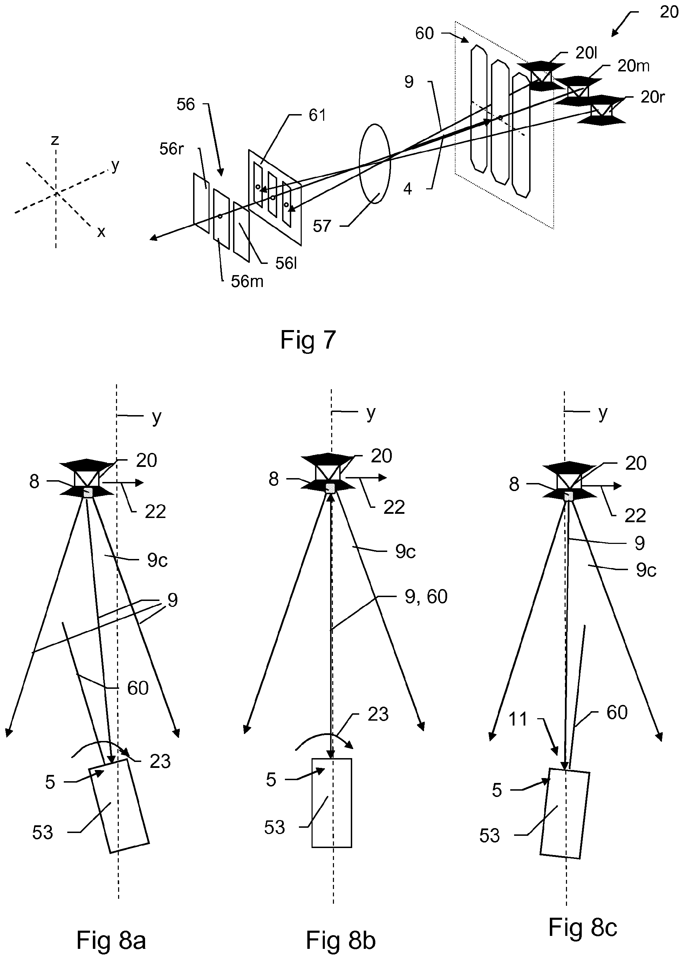

Die Figuren 6 und 7 zeigen Fortbildungen, mit welchen das Zielauffinden weiter verbessert werden kann, mit einer erfindungsgemässen Empfangseinheit mit strukturiertem Empfangsfächer, so dass also das fächerförmige Gesichtsfeld 60 in mehrere Sektoren unterteilt ist. Alternativ können aber auch mehrere Fächer nebeneinander verwendet werden. In allen Beispielen wird empfangsseitig der Sensorfächer 60 in Sektoren oder Segmente aufgeteilt. Dadurch wird eine grobe räumliche Positionsbestimmung auch in Fächerrichtung möglich.

Figur 6 zeigt die Strukturierung des Fächers der Zielauffindungseinheit. Die mittels der ersten Strahlquelle emittierte und von einem Retroreflektor 20 reflektierte Strahlung 9 wird nun durch eine Unterteilung des Empfangsfächers 60 mit zusätzlicher Ortsinformation empfangen. Diese Unterteilung des Fächers 60 in mehrere Sektoren lässt sich durch eine Schlitzblende 59 im ersten Brennpunkt der zylindrischen Empfängeroptik 57 realisieren. Bei der in Figur 6 dargestellten Ausführungsform ist eine schaltbare Schlitzblende 59 eingesetzt, bei der wahlweise die Transmission des relevanten Schlitzes verändert werden kann. Das photosensitive Element 56 ist im Bereich der zweiten Brennebene platziert, um das Gesichtsfeld der Empfangsoptik 57 in die Raumrichtung senkrecht zum Empfangsfächer 60 mit hoher Transmission abzudecken. Durch die Schlitzblende 59 wird der Empfangsfächer 60 in beispielsweise drei Sektoren unterteilt, was eine grobe Positions- oder Richtungsbestimmung auch in vertikaler Richtung ermöglicht. Die vom Retroreflektor 20 kommende Strahlung passiert im dargestellten Beispiel die mittlere Öffnung der Schlitzblende 59, so dass als zusätzliche Ortsinformation eine Grobinformation über den Winkelbereich in vertikaler Richtung vorliegt.

In derartigen Ausführungsformen nach der Figur 6 wird als weitere Option im Rahmen der Zielfunktionalität die erste Ausrichtungsänderung nicht nur um die erste Achse z ausgeführt, sondern in Abhängigkeit er zusätzlichen Ortsinformation zusätzlich um die zweite Achse x. Das Kopfteil wird abhängig davon um die zweite Achse x verschwenkt, in welchem Sektor des Empfangsfächers 60 die vom Ziel 20 ausgehende Zielauffindungsstrahlung 9 empfangen bzw. durch welchen Sektor des photosensitiven Elements 56 des Liniensensors die Strahlung 9 detektiert wird. Somit verfolgt die Zielachse in Abhängigkeit der detekierten Zielauffindungsstrahlung 9 die Bewegungstendenz des Ziels 20 wie zuvor beschrieben in horizontaler Richtung (xy-Ebene) und ausserdem zusätzlich in vertikaler Richtung (xz-Ebene). Durch diese zumindest grobe Verfolgung auch in vertikaler Richtung und damit zumindest grobe mittlere Ausrichten der Zielachse auf das Zielobjekt 20 auch in der Vertikalen ist ein schnelleres und/oder robusteres Zielauffinden ermöglicht, da die vertikale Ausrichtung der Zielfeinanzielungseinheit und damit der Feinanzielungsstrahlung mit einer Vorinformation über die ungefähre vertikale Richtung zum Ziel 20 erfolgt oder bereits eine ungefähre Ausrichtung in der Vertikalen auf das Ziel 20 vorliegt.

Figur 7 zeigt eine andere Ausführungsform der Zielauffindungseinheit mit mehreren Fächerteilbereichen oder Fächersektoren. Die Erzeugung mehrerer, nebeneinander angeordneter Empfangslinien als Empfangsfächer 60 erfolgt durch die Verwendung einer strukturierten photosensitiven Empfangsfläche 56 in der zweiten Brennebene, insbesondere in Zusammenhang mit einer in gleicher Anordnung strukturierten Schlitzblende 61. Diese Unterteilung der photosensitiven Empfangsfläche 56, z.B. in mehrere (hier: drei) horizontal nebeneinander geordnete Detektionslinien oder einen linearen Array von Photodetektoren, erzeugt dabei die Unterteilung des Empfangsfächers 60 in Detektionslinien 56r, 56m und 56l. Als Beispiel sind hier drei Empfangslinien 56r, 56m und 56l dargestellt, eine andere Detektionslinienzahl lässt sich durch die Wahl einer geeigneten Unterteilung bewirken. So sind insbesondere auch Fächer mit zwei oder vier Empfangslinien realisierbar.

Die mittlere Detektionslinie 56m dieses Beispiels ist zentral angeordnet und deckt sich in der Horizontalen exakt mit der Zielachse 4, so dass damit vom Ziel 20 reflektierte Zielauffindungsstrahlung 9 detektiert wird, wenn das Ziel sich in einer mittleren Horizontallage 20m befindet und die Zielachse 4 horizontal exakt auf das Ziel 20 ausgerichtet ist. Die rechte Empfangslinie 56r detektiert, wenn sich das Ziel 20 in einer Lage 20r leicht "rechts" von der Zielachse 4 befindet, die linke Empfangslinie 56l entsprechend, wenn sich das Ziel 20 leicht "links" von der Zielachse 4 befindet (um das Ziel 20 in diesen jeweiligen Lagen mit Zielauffindungsstrahlung 9 zu beleuchten, ist z.B. der Sendefächer quer zur Sendefächerebene verbreitert im Vergleich zu Ausführungsformen mit nur einer Detektionslinie oder Empfangslinie). Somit ist als zusätzliche Ortsinformation eine Grobinformation über den Winkelbereich in horizontaler Richtung empfangbar.

Somit liegt also bei derartigen Ausführungsformen anhand der detektierten Zielauffindungsstrahlung 9 eine Information darüber vor, ob sich das Ziel 20 "rechts" oder "links" von der Zielachse 4 befindet und mittels aufeinanderfolgender Detektionen darüber, ob sich das Ziel 20 nach "rechts" oder "links" bewegt. Deshalb erfolgt optional in derartigen Ausführungsformen nach einer Initialausrichtung der Zielachse 4 auf das Zielobjekt 20 das erste Ausrichtungsändern der Zielachse 4 in Abhängigkeit der detektierten Zielauffindungsstrahlung 9 derart, dass die Schwenkrichtung anhand der zusätzlichen Ortsinformation festgelegt wird. Die Schwenkrichtung wird also z.B. folgendermassen an die Bewegungsrichtung des Ziels 20 angepasst: wird bei einem Detektionsvorgang Zielauffindungsstrahlung 9 zuerst mit der mittleren Detektionslinie 56m und weiter mit der "rechten" Detektionslinie 56r detektiert, dann werden das Oberteil und die Zielachse 4 nach "rechts" verschwenkt. Wandert die reflektierte Zielauffindungsstrahlung 9 nach "links" aus, erfolgt die Ausrichtungsänderung um die erste Achse z nach "links". Diese Art der ersten Ausrichtungsänderung kann bei derartigen Ausführungsformen alternativ zu der zu den Figuren 2a-2f und 3 beschriebenen ersten Ausrichtungsänderung mit hin und her pendelndem Verschwenken erfolgen.

Als weitere Fortbildung einer Zielauffindungseinheit wird optional z.B. mittels mit Kombination zweier strukturierter PIN-Dioden, deren Strukturierungsausrichtung im rechten Winkel zueinander orientiert ist, eine zweidimensionale Unterteilung oder Strukturierung des Empfangsbereichs erzielt. So wird also in derartigen Ausführungsformen beispielsweise durch eine Kombination der Ausführungsformen nach den Figuren 6 und 7 eine vertikale und ausserdem horizontale Strukturierung des Empfangsfächers in horizontale und vertikale Sektoren erreicht.

Wie in den Figur 8a-c dargestellt, ist alternativ zu den beschriebenen Ausführungsformen, bei denen das Vermessungsgerät die erste Strahlquelle 8 zur Erzeugung von Zielauffindungsstrahlung aufweist, das Vermessungssystem dergestalt, dass das Zielobjekt 20 die erste Strahlquelle zur Erzeugung von Zielauffindungsstrahlung 9 und die Mittel zu deren Emission aufweist. Die Figuren 8a-c basieren auf den Figuren 2a-2c oder äquivalent den Figuren 2c-2e und stellen das sich relativ zum Vermessungsgerät bewegende Ziel 20 dar und das Kopfteil 53, das verschwenkt wird. Die erste Strahlquelle 8 und die Emissionsmittel, die in diesem Beispiel im Ziel 20 integriert sind, sorgen dafür, dass Zielauffindungsstrahlung 9 multidirektional emittiert wird, z.B. in Form eines Strahlkegels 9c (in den Figuren 8a-c ist dieser rein schematisch als Horizontalschnitt dargestellt) mit grossem Öffnungswinkel von z.B. 120°. Das Ziel 20 wird dabei ganz grob auf die Totalstation ausgerichtet, so dass das Vermessungsgerät im Strahlkegel 9c liegt. Alternativ erfolgt die multidirektionale Emission in der Horizontalen um 360° und in der Vertikalen mit einem Öffnungswinkel von z.B. 150°, so dass eine grobe Ausrichtung des Ziels 20 unnötig ist. Als weitere Alternativ wird multidirektional emittiert, indem leuchtturmartig ein Strahlkegel oder Strahlfächer verschwenkt wird.

Durch das ungefähre Ausrichten des Strahlkegels 9c trifft in der in Figur 8a dargestellten Ausrichtung des Kopfteils 53 bzw. der Zielachse zwar Zielauffindungsstrahlung 9 auf das Kopfteil 53. Aufgrund des vertikalen Empfangsfächers des Liniensensors der Zielauffindungseinheit 5 wird diese jedoch nicht empfangen und kann demgemäss nicht detektiert werden.

In der Anordnung der Figur 8b sind nun das Oberteil des Vermessungsgeräts und damit das Kopfteil 53 soweit verschwenkt, dass Zielauffindungsstrahlung 9 in der Ebene des Empfangsfächers 60 liegt, somit empfangen und detektiert wird.

In Figur 8c ist das erste Ausrichtungsändern der Zielachse soweit erfolgt, dass wiederum keine Zielauffindungsstrahlung 9 empfangbar ist. Mit anderen Worten ist das Oberteil sozusagen "über" das Ziel 20 hinaus verschwenkt.

Auch bei Ausführungsformen mit Strahlquelle 8 am Zielobjekt 20 kann im Rahmen der Zielauffindungsfunktionalität das Vermessungsgerät aktiv eine Initialausrichtungsänderung durchführen oder passiv abwarten, bis durch eine Bewegung des Ziels 20 Zielauffindungsstrahlung 9 detektiert wird. Weiterhin kann alternativ zur Darstellung der Figuren 8a-8c die erste Ausrichtungsänderung dauerhaft ohne pendelndes Verschwenken erfolgen, z.B. anhand einer zusätzlichen Ortsinformation mittels eines sektorierten Liniensensors (siehe Figur 7). D.h. ein selbstemittierendes Ziel 20 ist unabhängig von der Art und Weise der ersten Ausrichtungsänderung der Zielachse verwendbar, z.B. sowohl mit "pendelnden" Vermessungsgeräten als auch mit anderweitigem Verschwenken des Oberteils. Generell können die verschiedenen Ansätze erfindungsgemäss ebenso miteinander sowie mit Vorrichtungen und Verfahren zur Zielauffindung des Stands der Technik kombiniert werden.

## Patentansprüche

1. Vermessungssystem (1) zur Bestimmung der Position eines Zielpunkts, aufweisend ein Vermessungsgerät (2) und ein den Zielpunkt definierendes Zielobjekt (20) wobei das Vermessungssystem (1) aufweist
• eine Steuer- und Auswerteeinheit mit Auswerte-, Datenverarbeitungs- und Steuerungsfunktionalität,
• eine erste Strahlquelle (8) zur Erzeugung von Zielauffindungsstrahlung (9), und
• Mittel (54, 55) zur multidirektionalen Emission der Zielauffindungsstrahlung (9) in den freien Raum,
und das Vermessungsgerät (2) aufweist
• eine eine Zielachse (4) definierende Anzieleinrichtung (3),
• Mittel zum Ausrichtungsändern der Ausrichtung der Zielachse (4) um eine erste Achse (z) und eine zweite Achse (x),
• einen photosensitiven Liniensensor (7) zur Detektion von Zielauffindungsstrahlung (9), wobei der Empfangsbereich des Liniensensors (7) die Form eines Empfangsfächers (60) aufweist und die Zielachse (4) in definierter räumlicher Bezugsrelation zur Empfangsfächerebene steht
• eine zweite Strahlquelle zur Erzeugung von Feinanzielungsstrahlung (10),
• Mittel zur Emission der Feinanzielungsstrahlung (10) koaxial zur Zielachse (4) in Form eines Strahlkegels (10a) mit kleinem Öffnungswinkel,
• einen photosensitiven Flächensensor zur Detektion von vom Zielobjekt (20) reflektierter Feinanzielungsstrahlung (10),
**dadurch gekennzeichnet, dass**
die Steuer- und Auswerteeinheit ausgebildet ist zum Verfolgen des sich relativ zum Vermessungsgerät (2) bewegenden Zielobjekts (20) im Rahmen einer Zielauffindungsfunktionalität, wozu im Rahmen der Zielauffindungsfunktionalität automatisch gesteuert durch die Steuer- und Auswerteeinheit entsprechend einem definierten Algorithmus unter fortlaufender Emission von Zielauffindungsstrahlung (9) fortlaufend die Schritte
• Detektion von vom Zielobjekt (20) ausgehender Zielauffindungsstrahlung (9) mit dem Liniensensor (7) und
• erste Ausrichtungsänderung der Zielachse (4) um die erste Achse (z) in Abhängigkeit detektierten Zielauffindungsstrahlung (9)
erfolgen, so dass die Zielachse (4) die Bewegungstendenz (21, 22) des Zielobjekts (20) verfolgt.

2. Vermessungssystem (1) nach Anspruch 1,
**dadurch gekennzeichnet, dass**
im Rahmen der Zielauffindungsfunktionalität ausserdem fortlaufend die Schritte
• Emission der Feinanzielungsstrahlung (10) in Richtung der Zielachse (4) und
• zweite Ausrichtungsänderung der Zielachse (4) um die zweite Achse (x)
erfolgen und die Zielauffindungsfunktionalität wenigstens solange ausgeführt wird, bis aufgrund der ersten und zweiten Ausrichtungsänderung die Zielachse (4) zumindest derart grob auf das Zielobjekt (20) ausgerichtet ist, dass vom Zielobjekt (20) reflektierte Feinanzielungsstrahlung (10) vom Flächensensor detektiert wird, beispielsweise wobei das Zielobjekt (20) ausgebildet ist als Retroreflektor.

3. Vermessungssystem (1) nach Anspruch 2,
**dadurch gekennzeichnet, dass**
die Geschwindigkeit der zweiten Ausrichtungsänderung abgestimmt ist auf die Geschwindigkeit der ersten Ausrichtungsänderung, beispielsweise dergestalt, dass die Feinanzielungsstrahlung (10) einen Raumbereich sukzessive lückenlos überstreicht.

4. Vermessungssystem (1) nach Anspruch 2 oder 3,
**dadurch gekennzeichnet, dass**
im Rahmen der Zielauffindungsfunktionalität anhand detektierter Feinanzielungsstrahlung (10) eine Prädiktion der Bewegung des Zielobjekts (20) erfolgt, beispielsweise basierend auf wenigstens zwei, im Speziellen wenigstens drei, anhand detektierter Feinanzielungsstrahlung (10) ermittelter Richtungen zum Zielobjekt (20) und/oder Zielobjektpositionen, beispielsweise wobei im Rahmen der Zielauffindungsfunktionalität basierend auf der geschätzten Bewegung oder einer daraus abgeleiteten geschätzten Position ein Einlocken auf das Zielobjekt erfolgt.

5. Vermessungssystem (1) nach einem der vorherigen Ansprüche,
**dadurch gekennzeichnet, dass**
die erste Ausrichtungsänderung pendelnd zwischen zwei Umkehrpunkten (11, 12) in zwei entgegengesetzte Schwenkrichtungen (23, 24) erfolgt, wobei ein jeweiliger Umkehrpunkt (11, 12) dynamisch festgelegt wird in Abhängigkeit einer Ausrichtung der Zielachse (4), bei der Zielauffindungsstrahlung (9) mit dem Liniendetektor (7) detektiert wird.

6. Vermessungssystem (1) nach einem der vorherigen Ansprüche,
**dadurch gekennzeichnet, dass**
der Liniensensor (7) und damit der Empfangsbereich eine Strukturierung in wenigstens zwei, beispielsweise vertikale und/oder horizontale Sektoren, aufweist, wodurch eine zusätzliche Ortsinformation empfangbar ist, beispielsweise mittels
• einer strukturierten Blende (59) mit einem photosensitiven Element (56) und/oder
• einer strukturierte, photosensitiven Empfangsfläche (56r, 56m, 56l), im Speziellen mit einem linearen Array (56r, 56m, 56l) aus photosensitiven Elementen und einer Blende (61).

7. Vermessungssystem (1) nach Anspruch 6,
**dadurch gekennzeichnet, dass**
im Rahmen der Zielauffindungsfunktionalität anhand der zusätzlichen Ortsinformation die, beispielsweise horizontale, Schwenkrichtung (23, 24) der ersten Ausrichtungsänderung festgelegt wird, beispielsweise derart, dass die Schwenkrichtung an die, beispielsweise horizontale, Bewegungstendenz (21, 22) des Zielobjekts (20) angepasst ist.

8. Vermessungssystem (1) nach Anspruch 6 oder 7,
**dadurch gekennzeichnet, dass**
im Rahmen der Zielauffindungsfunktionalität die erste Ausrichtungsänderung zusätzlich um die zweite Achse (x) in Abhängigkeit der zusätzlichen Ortsinformation erfolgt, so dass die Zielachse (4) in Abhängigkeit der detektierten Zielauffindungsstrahlung (9) die Bewegungstendenz (21, 22) des Zielobjekts (20) in zwei Richtungen, beispielsweise horizontal und vertikal, verfolgt.

9. Vermessungssystem (1) nach einem der vorherigen Ansprüche,
**dadurch gekennzeichnet, dass**
das Vermessungsgerät (2) die erste Strahlquelle (8) und die Mittel (54, 55) zur multidirektionalen Emission der Zielauffindungsstrahlung (9) aufweist, beispielsweise wobei die Mittel (54, 55) dergestalt ausgebildet sind, dass ein, im Speziellen in horizontaler Richtung, verschwenkbarer, im Speziellen vertikaler, Sendefächer (9a) emittierbar ist, wobei die Zielachse (4) in definierter räumlicher Bezugsrelation zur Sendefächerebene steht, beispielsweise parallel zur Sendefächerebene ist oder in der Sendefächerebene liegt, wobei im Speziellen
• der Sendefächer (9a) einen, beispielsweise variablen, Öffnungswinkel zwischen 20° und 70°, beispielsweise zwischen 30° und 50° aufweist, und/oder
• die Mittel (54, 55) aufweisen
□ eine Zylinderlinse oder ein Zylinderlinsenarray (54) und/oder
□ ein Mikrolinsenarray und/oder
□ ein diffraktives optisches Element.

10. Vermessungssystem (1) nach einem der vorherigen Ansprüche,
**dadurch gekennzeichnet, dass**
• im Rahmen der Zielauffindungsfunktionalität anhand von detektierter Zielauffindungsstrahlung (9) und/oder detektierter Feinanzielungsstrahlung (10) eine Distanz zum Zielobjekt (20) bestimmt wird, beispielsweise mittels Pulslaufzeitverfahrens, beispielsweise wobei im Rahmen der Zielauffindungsfunktionalität anhand der bestimmten Distanz eine Identifizierung des Zielobjekts (20) und/oder eine Bestimmung einer, beispielsweise groben, Position des Zielobjekts (20) erfolgt und/oder
• das Vermessungssystem eine Exklusionsfunktionalität aufweist, mittels derer irrelevante Zielobjekte anhand von vorbekannten Positionen der irrelevanten Zielobjekte exkludierbar sind.

11. Vermessungssystem (1) nach einem der vorherigen Ansprüche,
**dadurch gekennzeichnet, dass**
• die Zielauffindungsstrahlung gepulst ist und im Rahmen der Zielauffindungsfunktionalität anhand der Anzahl der bei einem Detektionsvorgang detektierten Impulse (9b) der detektierten Zielauffindungsstrahlung (9) eine, beispielsweise horizontale, Bewegungsrichtung des Zielobjekts (20) bestimmt wird, beispielsweise wobei zusätzlich anhand der Impulsanzahl eine Geschwindigkeit der Bewegung des Zielobjekts (20) geschätzt wird und/oder
• im Rahmen der Zielauffindungsfunktionalität eine Initialausrichtungsänderung der Zielachse (4) um die erste Achse (z) erfolgt, so dass vom Zielobjekt (20) ausgehende Zielauffindungsstrahlung (9) vom Liniendetektor (7) empfangen wird, beispielsweise wobei
das Zielobjekt (20) drahtlos, im Speziellen per Lichtsignal oder Funkverbindung, ein Identifizierungssignal an die Steuer- und Auswerteeinheit sendet, und/oder das Zielobjekt (20) einen GNSS-Empfänger aufweist und die Initialausrichtung basierend auf einer vom GNSS-Empfänger ermittelten Position des Zielobjekts (20) erfolgt.

12. Vermessungssystem (1) nach einem der vorherigen Ansprüche,
**dadurch gekennzeichnet, dass**
die Geschwindigkeit, mit der die erste Ausrichtungsänderung erfolgt, dynamisch an die Bewegung des Zielobjekts (20) angepasst wird.

13. Vermessungssystem (1) nach Anspruch 12,
**dadurch gekennzeichnet, dass**
die Geschwindigkeit, mit der die erste Ausrichtungsänderung erfolgt, dynamisch an die Winkelgeschwindigkeit des Zielobjekts (20) relativ zum Vermessungsgerät (2) angepasst wird.

14. Verfahren zum automatischen Auffinden eines bewegten, einen Zielpunkt definierenden Zielobjekts (20) mit einem Teil des Vermessungssystems nach Anspruch 1 bildenden Vermessungsgerät (2), wobei im Rahmen des Verfahrens das sich relativ zum Vermessungsgerät (2) bewegende Zielobjekt (20) verfolgt wird, indem fortlaufend
• Zielauffindungsstrahlung (9) emittiert wird in Form eines Sendefächers (9a), und
• durch die Mittel zum Ausrichtungsändern die Zielauffindungsstrahlung (9) um die erste Achse (z) in zwei entgegengesetzte Schwenkrichtungen (23, 24) zwischen zwei Umkehrpunkten (11, 12) alternierend verschwenkt wird, wobei ein jeweiliger Umkehrpunkt (11, 12) dynamisch festgelegt wird in Abhängigkeit einer durch die Mittel zum Ausrichtungsändern eingestellten Ausrichtung, bei der vom Zielobjekt (20) reflektierte Zielauffindungsstrahlung (9) mit dem Liniensensor (7) detektiert wird,
so dass die durch die Mittel zum Ausrichtungsändern eingestellte Ausrichtung und damit die Zielachse (4) die Bewegungstendenz (21, 22) des Zielobjekts (20) verfolgt.

15. Computerprogrammprodukt, das auf einem maschinenlesbaren Träger gespeichert ist, oder Computer-Datensignal, verkörpert durch eine elektromagnetische Welle, mit Programmcode, das oder der geeignet ist zur Durchführung des Verfahrens nach Anspruch 14, beispielsweise wobei das Computerprogrammprodukt in einem Vermessungssystem (1) nach Anspruch 1 implementiert ist.

## Claims

1. Surveying system (1) for determining the position of a target point, having a surveying device (2) and a target object (20) which defines the target point, wherein the surveying system (1) has
• a control and evaluation unit with evaluation, data-processing and control functionality,
• a first radiation source (8) for generating target-finding radiation (9), and
• means (54, 55) for multi-directional emission of the target-finding radiation (9) into free space,
and the surveying device (2) has
• a sighting device (3), which defines a target axis (4),
• means for changing the alignment of the target axis (4) about a first axis (z) and a second axis (x),
• a photosensitive line sensor (7) for detecting target-finding radiation (9), wherein the reception range of the line sensor (7) is in the form of a reception fan (60), and the target axis (4) has a defined spatial reference relation with respect to the plane of the reception fan,
• a second radiation source for generating fine-sighting radiation (10),
• means for emitting the fine-sighting radiation (10) coaxially with respect to the target axis (4) in the form of a radiation cone (10a) with a small angle of aperture,
• a photosensitive large-area sensor for detecting fine-sighting radiation (10) reflected by the target object (20),
**characterized in that**
the control and evaluation unit is designed to track the target object (20), moving relative to the surveying device (2), within the scope of a target-finding functionality, wherein within the scope of the target-finding functionality the following steps are carried out continuously and automatically by the control and evaluation unit in accordance with a defined algorithm with continuous emission of target-finding radiation (9):
• target-finding radiation (9) which originates from the target object (20) is detected with the line sensor (7) and
• a first change in alignment of the target axis (4) about the first axis (z) occurs as a function of detected target-finding radiation (9),
with the result that the target axis (4) tracks the movement tendency (21, 22) of the target object (20).

2. Surveying system (1) according to Claim 1,
**characterized in that**
within the scope of the target-finding functionality the following steps are also carried out continuously:
• fine-sighting radiation (10) is emitted in the direction of the target axis (4) and
• a second change in alignment of the target axis (4) about the second axis (x) occurs,
and a target-finding functionality is carried out at least until, owing to the first and second changes in alignment, the target axis (4) is aligned approximately with the target object (20) at least in such a way that fine-sighting radiation (10) reflected by the target object (20) is detected by the large-area sensor, in particular wherein the target object (20) is embodied as a retro-reflector.

3. Surveying system (1) according to Claim 2,
**characterized in that**
the speed of the second change in alignment is adjusted to the speed of the first change in alignment, in particular in such a way that the fine-sighting radiation (10) successively passes over a spatial area gaplessly.

4. Surveying system (1) according to Claim 2 or 3,
**characterized in that**
within the scope of the target-finding functionality on the basis of detected fine-sighting radiation (10) the movement of the target object (20) is predicted, in particular on the basis of at least two, specifically at least three directions to the target object (20) and/or target object positions, said directions determined on the basis of detected fine-sighting radiation (10), in particular wherein within the scope of the target-finding functionality the target object is locked onto on the basis of the estimated movement or an estimated position derived therefrom.

5. Surveying system (1) according to any one of the preceding claims,
**characterized in that**
the first change in alignment occurs in an oscillating fashion between two reversal points (11, 12) in two opposing pivoting directions (23, 24), wherein a respective reversal point (11, 12) is defined dynamically as a function of an alignment of the target axis (4), at which alignment target-finding radiation (9) is detected with the line detector (7).

6. Surveying system (1) according to any one of the preceding claims,
**characterized in that**
the line sensor (7), and therefore the reception range, are structured into at least two, in particular vertical and/or horizontal, sectors, as a result of which additional location information can be received, in particular by means of
• a structured diaphragm (59) with a photosensitive element (56) and/or
• a structured photosensitive reception surface (56r, 56m, 561), specifically with a linear array (56r, 56m, 561) of photosensitive elements and a diaphragm (61) .

7. Surveying system (1) according to Claim 6,
**characterized in that**
within the scope of the target-finding functionality on the basis of the additional location information the, in particular horizontal, pivoting direction (23, 24) of the first change in alignment is defined, in particular in such a way that the pivoting direction is adapted to the, in particular horizontal, movement tendency (21, 22) of the target object (20).

8. Surveying system (1) according to Claim 6 or 7,
**characterized in that**
within the scope of the target-finding functionality the first change in alignment occurs additionally about the second axis (x) as a function of the additional location information, with the result that the target axis (4) tracks the movement tendency (21, 22) of the target object (20) in two directions, in particular horizontally and vertically, as a function of the detected target-finding radiation (9).

9. Surveying system (1) according to any one of the preceding claims,
**characterized in that**
the surveying device (2) has the first radiation source (8) and the means (54, 55) for multi-directional emission of the target-finding radiation (9), in particular wherein the means (54, 55) are embodied in such a way that a transmission fan (9a), which can be pivoted, specifically in the horizontal direction, and is specifically a vertical transmission fan, can be emitted, wherein the target axis (4) is in a defined spatial reference relation with respect to the plane of the transmission fan, in particular parallel with respect to the plane of the transmission fan or is in the plane of the transmission fan, wherein specifically
• the transmission fan (9a) has an, in particular variable, angle of aperture between 20° and 70°, in particular between 30° and 50°, and/or
• the means (54, 55) have
□ a cylinder lens or a cylinder lens array (54) and/or
□ a micro-lens array and/or
□ a diffractive optical element.

10. Surveying system (1) according to any one of the preceding claims,
**characterized in that**
• a distance from the target object (20) is determined within the scope of the target-finding functionality on the basis of detected target-finding radiation (9) and/or detected fine-sighting radiation (10), in particular by means of a pulse propagation time method, in particular wherein within the scope of the target-finding functionality on the basis of the determined distance the target object (20) is identified and/or an, in particular approximate, position of the target object (20) is determined, and/or
• the surveying system has an exclusion functionality by means of which irrelevant target objects can be excluded on the basis of previously known positions of the irrelevant target objects.

11. Surveying system (1) according to any one of the preceding claims,
**characterized in that**
• the target-finding radiation is pulsed, and an, in particular horizontal, direction of movement of the target object (20) is determined within the scope of the target-finding functionality on the basis of the number of pulses (9b), detected during a detection process, of the detected target-finding radiation (9), in particular wherein a speed of the movement of the target object (20) is additionally estimated on the basis of the number of pulses, and/or
• within the scope of the target-finding functionality a change in the initial alignment of the target axis (4) about the first axis (z) occurs, with the result that target-finding radiation (9) originating from the target object (20) is received by the line detector (7), in particular wherein the target object (20) transmits an identification signal to the control and evaluation unit in a wireless fashion, specifically by light signal or radio link, and/or the target object (20) has a GNSS receiver, and the initial alignment is carried out on the basis of a position of the target object (20) which is ascertained by the GNSS receiver.

12. Surveying system (1) according to any one of the preceding claims,
**characterized in that**
the speed at which the first change in alignment occurs is adapted dynamically to the movement of the target object (20).

13. Surveying system (1) according to claim 12,
**characterized in that**
the speed at which the first change in alignment occurs is adapted dynamically to the angular speed of the target object (20) relative to the surveying device (2).

14. Method for automatically finding a moving target object (20), which defines a target point, with a surveying device (2), which forms a part of a surveying system according to Claim 1, wherein within the scope of the method the target object (20) which moves relative to the surveying device (2) is tracked in that, on a continuous basis:
• target-finding radiation (9) is emitted in the form of a transmission fan (9a), and
• the target-finding radiation (9) is pivoted by the means for changing the alignment about the first axis (z) in an alternating fashion in two opposing pivoting directions (23, 24) between two reversal points (11, 12), wherein a respective reversal point (11, 12) is defined dynamically as a function of an alignment set by the means for changing the alignment, at which target-finding radiation (9) reflected by the target object (20) is detected with the line sensor (7),
with the result that the alignment set by the means for changing the alignment and therefore the target axis (4) tracks the movement tendency (21, 22) of the target object (20).

15. Computer program product which is stored on a machine-readable carrier, or computer data signal, embodied by an electromagnetic wave, with program code, which product or signal is suitable for carrying out the method according to Claim 14, in particular wherein the computer program product is implemented in a surveying system (1) according to Claim 1.

## Revendications

1. Système de mesure (1) destiné à déterminer la position d'un point cible, comportant un appareil de mesure (2) et un objet cible (20) définissant le point cible, le système de mesure (1) comportant :
• une unité de commande et d'évaluation dotée d'une fonctionnalité d'évaluation, de traitement des données et de commande,
• une première source de rayonnement (8) destinée à créer un rayonnement pour l'acquisition de cible (9), et
• des moyens (54, 55) destinés à l'émission multidirectionnelle du rayonnement pour l'acquisition de cible (9) dans l'espace libre,
et l'appareil de mesure (2) comportant :
• un dispositif de visée (3) définissant un axe de visée (4),
• des moyens de modification de l'orientation de l'axe de visée (4) par rapport à un premier axe (z) et à un deuxième axe (x),
• un détecteur de ligne photosensible (7) destiné à détecter le rayonnement pour l'acquisition de cible (9), le domaine de réception du détecteur de ligne (7) ayant la forme d'un éventail de réception (60) et l'axe de visée (4) étant dans une relation spatiale définie avec le plan de l'éventail de réception,
• une deuxième source de rayonnement destinée à créer un rayonnement pour la visée fine (10),
• des moyens destinés à l'émission du rayonnement pour la visée fine (10) coaxialement avec l'axe de visée (4) sous forme d'un cône de rayonnement (10a) avec petit angle d'ouverture,
• un détecteur de surface photosensible destiné à détecter le rayonnement pour la visée fine (10) réfléchi par l'objet cible (20),
**caractérisé en ce que**
l'unité de commande et d'évaluation est conçue pour poursuivre l'objet cible (20) qui se déplace par rapport à l'appareil de mesure (2) dans le cadre d'une fonctionnalité d'acquisition de cible, ce pour quoi, dans le cadre de ladite fonctionnalité d'acquisition de cible, l'unité de commande et d'évaluation commande de manière automatique et ininterrompue les étapes suivantes selon un algorithme défini et pendant l'émission ininterrompue du rayonnement pour l'acquisition de cible (9):
• détection, par le détecteur de ligne (7), du rayonnement pour l'acquisition de cible (9) provenant de l'objet cible (20) et
• première modification de l'orientation de l'axe de visée (4) par rapport au premier axe (z) en fonction du rayonnement pour l'acquisition de cible (9) détecté,
de manière que l'axe de visée (4) poursuive la tendance du mouvement (21, 22) de l'objet cible (20).

2. Système de mesure (1) selon la revendication 1,
**caractérisé en ce que**
dans le cadre de la fonctionnalité d'acquisition de cible, les étapes suivantes sont exécutées en outre de manière ininterrompue :
• émission du rayonnement pour la visée fine (10) en direction de l'axe de visée (4) et
• deuxième modification de l'orientation de l'axe de visée (4) par rapport au deuxième axe (x)
et la fonctionnalité d'acquisition de cible est exécutée au moins jusqu'à ce que, suite à la première et à la deuxième modification de l'orientation, l'axe de visée (4) soit grossièrement orienté vers l'objet cible (20) au moins de façon que le rayonnement pour la visée fine (10) réfléchi par l'objet cible (20) soit détecté par le détecteur de surface, l'objet cible (20) étant par exemple conçu comme un ré-troréflecteur.

3. Système de mesure (1) selon la revendication 2,
**caractérisé en ce que**
la vitesse de la deuxième modification de l'orientation est accordée à la vitesse de la première modification de l'orientation, par exemple de manière que le rayonnement pour la visée fine (10) balaye complètement et progressivement un domaine spatial.

4. Système de mesure (1) selon la revendication 2 ou 3,
**caractérisé en ce que**
dans le cadre de la fonctionnalité d'acquisition de cible à partir du rayonnement pour la visée fine (10) détecté, il est effectué une prédiction du mouvement de l'objet cible (20), par exemple à partir d'au moins deux, notamment d'au moins trois, directions vers l'objet cible (20) et/ou positions de l'objet cible obtenues au moyen du rayonnement pour la visée fine (10) détecté, un verrouillage sur l'objet cible se produisant par exemple à partir du mouvement estimé ou d'une position estimée par déduction à partir de ce dernier, dans le cadre de la fonctionnalité d'acquisition de cible.

5. Système de mesure (1) selon l'une des revendications précédentes,
**caractérisé en ce que**
la première modification de l'orientation s'effectue alternativement entre deux points de rebroussement (11, 12) dans deux directions de pivotement opposées (23, 24), chaque point de rebroussement (11, 12) étant défini dynamiquement en fonction d'une orientation de l'axe de visée (4) dans laquelle le détecteur de ligne (7) détecte le rayonnement pour l'acquisition de cible (9).

6. Système de mesure (1) selon l'une des revendications précédentes,
**caractérisé en ce que**
le détecteur de ligne (7) et avec lui le domaine de réception présentent une structuration en au moins deux secteurs, par exemple verticaux et/ou horizontaux, moyennant quoi il est possible de recevoir une information de position supplémentaire, par exemple au moyen de :
• un diaphragme structuré (59) doté d'un élément photosensible (56) et/ou
• une surface de réception photosensible structurée (56r, 56m, 56l), notamment dotée d'une matrice linéaire (56r, 56m, 56l) d'éléments photosensibles et d'un diaphragme (61).

7. Système de mesure (1) selon la revendication 6,
**caractérisé en ce que**
dans le cadre de la fonctionnalité d'acquisition de cible, la direction de pivotement (23, 24), par exemple horizontale, de la première modification de l'orientation est déterminée à partir de l'information de position supplémentaire, par exemple de manière à adapter la direction de pivotement à la tendance du mouvement (21, 22), par exemple horizontale, de l'objet cible (20).

8. Système de mesure (1) selon la revendication 6 ou 7,
**caractérisé en ce que**
dans le cadre de la fonctionnalité d'acquisition de cible, la première modification de l'orientation s'effectue de plus par rapport au deuxième axe (x) en fonction de l'information de position supplémentaire, de manière que l'axe de visée (4) poursuive la tendance du mouvement (21, 22) de l'objet cible (20) dans deux directions, par exemple horizontale et verticale, en fonction du rayonnement pour l'acquisition de cible (9) détecté.

9. Système de mesure (1) selon l'une des revendications précédentes,
**caractérisé en ce que**
l'appareil de mesure (2) comporte la première source de rayonnement (8) et les moyens (54, 55) destinés à l'émission multidirectionnelle du rayonnement pour l'acquisition de cible (9), lesdits moyens (54, 55) étant par exemple conçus de manière à pouvoir émettre un éventail d'émission (9a), notamment vertical, pouvant être pivoté, notamment dans la direction horizontale, l'axe de visée (4) étant dans une relation spatiale définie avec le plan de l'éventail d'émission, par exemple parallèle au plan de l'éventail d'émission ou dans le plan de l'éventail d'émission,
• l'éventail d'émission (9a) présentant notamment un angle d'ouverture, par exemple variable, entre 20° et 70°, par exemple entre 30° et 50°, et/ou
• lesdits moyens (54, 55) comportant notamment
∘ une lentille cylindrique ou une matrice de lentilles cylindriques (54) et/ou
∘ une matrice de microlentilles et/ou
∘ un élément optique diffractif.

10. Système de mesure (1) selon l'une des revendications précédentes,
**caractérisé en ce que**
• dans le cadre de la fonctionnalité d'acquisition de cible, il est déterminé une distance par rapport à l'objet cible (20) à partir du rayonnement pour l'acquisition de cible (9) détecté et/ou du rayonnement pour la visée fine (10) détecté, par exemple au moyen d'un procédé relatif à la durée de propagation d'une impulsion ; une identification de l'objet cible (20) et/ou une détermination d'une position, par exemple grossière, de l'objet cible (20) ayant par exemple lieu à partir de la distance déterminée, dans le cadre de la fonctionnalité d'acquisition de cible et/ou
• le système de mesure possède une fonctionnalité d'exclusion au moyen de laquelle des objets cibles non pertinents peuvent être exclus à partir de positions préalablement connues desdits objets cibles non pertinents.

11. Système de mesure (1) selon l'une des revendications précédentes,
**caractérisé en ce que**
• le rayonnement pour l'acquisition de cible est pulsé et, dans le cadre de la fonctionnalité d'acquisition de cible, il est déterminé une direction de mouvement de l'objet cible (20), par exemple horizontale, à partir du nombre d'impulsions (9b) du rayonnement pour l'acquisition de cible (9) détectées pendant un processus de détection ; une vitesse de déplacement de l'objet cible (20) étant par exemple de plus estimée à partir dudit nombre d'impulsions et/ou
• dans le cadre de la fonctionnalité d'acquisition de cible, il se produit une modification de l'orientation initiale de l'axe de visée (4) par rapport au premier axe (z) de manière que le détecteur de ligne (7) reçoive le rayonnement pour l'acquisition de cible (9) provenant de l'objet cible (20), l'objet cible (20) émettant par exemple un signal d'identification vers l'unité de commande et d'évaluation, sans fil, notamment par signalisation lumineuse ou liaison radio, et/ou l'objet cible (20) comprenant un récepteur GNSS et l'orientation initiale étant effectuée à partir d'une position de l'objet cible (20) obtenue par ledit récepteur GNSS.

12. Système de mesure (1) selon l'une des revendications précédentes,
**caractérisé en ce que**
la vitesse de la première modification de l'orientation est adaptée dynamiquement au mouvement de l'objet cible (20).

13. Système de mesure (1) selon la revendication 12,
**caractérisé en ce que**
la vitesse à laquelle s'effectue la première modification de l'orientation est adaptée dynamiquement à la vitesse angulaire de l'objet cible (20) par rapport à l'appareil de mesure (2).

14. Procédé d'acquisition automatique d'un objet cible (20) en mouvement définissant un point cible, au moyen d'un appareil de mesure (2) faisant partie du système de mesure selon la revendication 1, l'objet cible (20) qui se déplace par rapport à l'appareil de mesure (2) étant poursuivi dans le cadre dudit procédé par l'exécution continue des étapes suivantes :
• émission d'un rayonnement pour l'acquisition de cible (9) sous forme d'un éventail d'émission (9a), et
• grâce aux moyens de modification de l'orientation, pivotement alternatif du rayonnement pour l'acquisition de cible (9) par rapport au premier axe (z) dans deux directions de pivotement opposées (23, 24) entre deux points de rebroussement (11, 12), chaque point de rebroussement (11, 12) étant fixé dynamiquement en fonction d'une orientation, déterminée par les moyens de modification de l'orientation, dans laquelle le détecteur de ligne (7) détecte le rayonnement pour l'acquisition de cible (9) réfléchi par l'objet cible (20),
de manière que l'orientation déterminée par les moyens de modification de l'orientation et avec elle l'axe de visée (4) permettent de poursuivre la tendance du mouvement (21, 22) de l'objet cible (20).

15. Produit programme d'ordinateur enregistré sur un support lisible par une machine, ou bien signal de données informatiques matérialisé par une onde électromagnétique, comportant un code logiciel, lequel produit, signal ou code est apte à l'exécution du procédé selon la revendication 14, le produit programme d'ordinateur étant par exemple mis en oeuvre dans un système de mesure (1) selon la revendication 1.
